**Europäisches Patentamt**

**European Patent Office**

**Office européen des brevets**

(19)

(11) Numéro de publication: **0 201 498**
**B1**

(12) **FASCICULE DE BREVET EUROPEEN**

(45) Date de publication du fascicule du brevet: **11.04.90**

(51) Int. Cl.⁵: **H 04 L 12/28, H 04 B 3/54**

(21) Numéro de dépôt: **85900681.9**

(22) Date de dépôt: **17.01.85**

(86) Numéro de dépôt international:
**PCT/FR85/00008**

(87) Numéro de publication internationale:
**WO 85/03395 01.08.85 Gazette 85/17**

(54) PROCEDE DE TRANSMISSION DE DONNEES NUMERIQUES, RESEAU ET MODULE METTANT EN OEUVRE LE PROCEDE.

(30) Priorité: **19.01.84 FR 8400937**

(43) Date de publication de la demande:
**20.11.86 Bulletin 86/47**

(45) Mention de la délivrance du brevet:
**11.04.90 Bulletin 90/15**

(84) Etats contractants désignés:
**AT BE CH DE FR GB LI LU NL SE**

(56) Documents cités:
**EP-A-0 094 180      US-A-2 282 968**
**WO-A-82/02809      US-A-4 017 841**
**FR-A-2 526 975      US-A-4 209 840**

Revue Générale de l'Electricité, N 12, December 1981, Paris (FR) N. Bailly : "La transmission d'informations sur fils secteur. Un moyen de gestion de la puissance et de l'énergie dans les locaux existants" pages 901-907 IBM Technical Disclosure Bulletin, volume 19, N 5, October 1976, New York (US) D.W. Grimes : "Noise-Eliminator Circuit", pages 1536-1537, lines 1-4 Machine Design, volume 55, N 24, October 1983, Cleveland (US) F.W. Gutzwiller : "Control networks for the home", pages 109-112

(73) Titulaire: **MINISYSTEMES**
**Chemin du Viaduc**
**Le Montaiguet F-13100 Aix en Provence (FR)**

(72) Inventeur: **CHAMPARNAUD, Jean-François**
**Clos du Rau Chemin du Viaduc**
**F-13100 Aix en Provence (FR)**
Inventeur: **ORANGE, Jackie**
**2, avenue Paul Carrere**
**F-13012 Marseille (FR)**

(74) Mandataire: **Rinuy, Santarelli**
**14, avenue de la Grande Armée**
**F-75017 Paris (FR)**

## Description

L'invention concerne, d'une manière générale, les réseaux de communication de données numériques, de télécommande et de télémesure. L'invention concerne, en particulier, les réseaux locaux de communication de données par paquets, par courant porteur, plus particulièrement spécialisés à des fonctions de télécommande et de télémesure.

Au sens de l'invention, on appellera réseaux locaux de tels réseaux capables de transferts de données entre des modules adressables quelconques par au moins une ligne de transfert banalisée, ces modules pouvant servir d'interfaces entre des actionneurs, des capteurs ou des unités logiques centrales, et ce réseau, de façon à réaliser lesdites fonctions de télécommande et de télémesure.

Dans un exemple de réalisation, un tel réseau permet l'échange de données entre au moins une unité centrale et un nombre quelconque d'actionneurs, tels que, par exemple, des relais de commande, ou des capteurs, cette unité centrale étant raccordée à un module dit "communicateur", tandis que les actionneurs ou les capteurs sont raccordés à des modules dits "satellites".

Dans un autre exemple de réalisation, on juxtapose un nombre quelconque de réseaux tels que définis ci-dessus en sorte que l'on peut réaliser ainsi un réseau permettant la communication entre un nombre quelconque d'unités centrales et des capteurs ou actionneurs.

Dans ces exemples de réalisation, le réseau de transmission peut être constitué par un réseau spécifique aux données ou par un réseau de transfert d'énergie tel que le réseau 220V, 50Hz ou un réseau quelconque de transfert d'énergie (12V, 48V, etc.).

On connaît, à l'heure actuelle, deux grandes familles de réseaux locaux: les réseaux locaux faisant appel au courant porteur et ceux ne faisant pas appel au courant porteur.

D'une manière générale, le problème à résoudre est celui ayant trait au conflit pouvant exister entre des informations émanant en même temps de plusieurs modules. Habituellement, il est convenu d'appeler ces conflits "collisions" d'informations. En effet, l'homme de l'art sait bien que dès qu'il y a émission simultanée de deux trains d'informations à destination d'un même récepteur, ce dernier peut difficilement reconnaître l'information en provenance de chacun des émetteurs en question. En pratique, cela conduit à des blocages de système avec toutes les conséquences que l'on peut imaginer dans des réseaux destinés, soit à la télécommande, soit à la télémesure.

En pratique, trois types de réseaux ont été conçus pour résoudre ce problème.

Dans un premier type de réseau, travaillant uniquement par courant porteur, on affecte une fréquence propre à chaque module. Dès lors, les modules n'entrent en action qu'à partir du moment où ils reçoivent un signal émis dans la fréquence qui leur est attribuée.

Ce type de réseau est limité par le fait même qu'il s'agit de diviser une bande de fréquence attribuable en plusieurs groupes de fréquences, la limitation apparaissant par le résultat de cette division.

Dans un second type de réseau, travaillant, soit sans courant porteur ou avec un courant porteur à fréquence unique, chaque module commence par écouter pour savoir s'il existe un autre module en train de transmettre.

Ce type de réseau est également limité non seulement quant au nombre de stations susceptibles d'être implantées, mais surtout quant au nombre de stations susceptibles d'émettre à un instant donné. En effet, ce type de réseau procède du principe que les émissions sont aléatoires, c'est-à-dire que, dans un laps de temps donné, chaque station ou module émettra avec la même probabilité, alors qu'en pratique c'est rarement le cas: dans un réseau de télécommande ou de télémesure, il n'est pas rare que, pendant un laps de temps donné, ce soit toujours le même actionneur ou le même capteur qui soit mis en oeuvre.

Pendant ce laps de temps, il y aura donc une "préférence" pour ce module qui se trouvera émettre les paquets les plus longs. S'il se trouve, pendant ce laps de temps, deux autres modules en attente, il y a un risque certain de voir ces deux modules émettre au même moment dès que le module "préféré" aura cessé d'émettre.

Le troisième type de réseau existant travaille sans courant porteur ou avec un courant porteur à fréquence unique et fonctionne suivant une méthode consistant à définir des intervalles de temps au cours desquels les stations ou modules pourront transmettre leurs informations.

Ce type de réseau comporte essentiellement deux limitations. D'une part, il y a un ralentissement de la vitesse du réseau dû à la définition même de celui-ci. En effet, lorsqu'il y a de nombreux intervalles de temps affectés, il y a forcément un temps d'attente important pour une station émettant dans un intervalle de temps donné puisqu'elle doit attendre l'instant prédéterminé pour émettre.

D'autre part, ce type de réseau comporte une structure centralisée particulièrement contraignante du point de vue séquencement. En effet, il existe une horloge de synchronisation.

Dans certaines réalisations, l'horloge est constituée par la fréquence du réseau de distribution d'énergie (50 Hz), ce qui impose, pour ces réseaux locaux de communication de données, l'emploi de réseaux de distribution de courant alternatif.

Par ailleurs le document FR—A—2.526.975 décrit un réseau de transmission de données basé sur une technique de "jeton virtuel" assurant une vitesse maximale des échanges. Le support unique est spécialisé. Le nombre maximal des calculateurs connectés en parallèle est prédéterminé à une valeur m. Dans ces conditions la suppression des collisions entre émetteurs est assurée par un droit à émettre après un délai proportionnel à la différence entre le numéro du dernier émetteur et le numéro du candidat émetteur.

La technique qui est décrite dans ce document est adaptée à des supports spécialisés dont les parasites sont statistiquement absents. En conséquence, elle s'applique mal à des milieux très parasités dont le plus mauvais exemple est celui des fils de distribution d'énergie électrique. En particulier la détection de parasites pendant l'émission n'est pas assurée. Par ailleurs, le nombre maximal des éléments du réseau doit être connu à l'avance par chacun de ces éléments pour assurer une vitesse maximale des échanges, limitant ainsi la souplesse d'évolution du réseau.

L'article dans la Revue Générale de l'Electricité de Décembre 1981, N° 12, pages 901—907 décrit un système de télécommande d'appareils électriques par l'intermédiaire du secteur 220V. On y utilise une fréquence porteuse dont les trains d'impulsions sont codés en messages numériques. Le contrôle des erreurs entraînées par l'important parasitage du support est assuré par le doublement de chaque mot constituant le message. Le codage très simplifié entraîne parfois des enclenchements intempestifs sur parasites.

Ce document ne traite que d'un système de télécommande très simplifié. L'absence d'un protocole d'échange et d'un séquencement anti-collisions entre les différents éléments ne permettent pas de le considérer comme un réseau de transmission de données numériques et d'en envisager les applications. De plus, le contrôle et le traitement des erreurs dues aux importants parasites du secteur paraît insuffisant pour des applications fiables. Le passage en haute impédance, entre les trains d'impulsions des émetteurs, n'est pas traité, limitant ainsi leur nombre potentiel.

La présente invention a notamment pour objet de pallier les inconvénients rappelés ci-dessus.

La présente invention vise en particulier un procédé de transmission de données numériques dans un réseau du genre comportant au moins deux modules adressables reliés par moins une ligne de transmission banalisée, procédé du genre dans lequel on divise le temps pour définir des laps de temps d'émission et dans lequel chaque module contrôle l'absence de signal sur la ligne avant d'émettre, et n'émet que dans ce dernier cas, caractérisé en ce qu'on affecte à chaque module au moins un numéro d'ordre, on lui associe au moins un compteur dont le contenu est représentatif du numéro du module autorisé à émettre un message dit, par commodité, "signifiant"; on définit au moins trois intervalles de temps de silence entre messages, ou délais, de durée croissante, respectivement appelés, par commodité, "délai de message signifiant", "délai de candidature d'ordre supérieur" et "délai de candidature d'ordre inférieur", et caractérisé en ce que, en appelant, par commodité, "candidat émetteur", les modules ayant un message signifiant à transmettre et "message de candidature", un message émis par un candidat émetteur dont l'ordre ne suit pas immédiatement celui du module qui vient d'émettre, on utilise lesdits délais de durées croissantes pour séquencer les émissions éventuelles des modules comme suit:

on laisse émettre le candidat émetteur autorisé à émettre au bout d'un délai correspondant audit délai de message signifiant après le dernier signal présent sur la ligne;

on laisse émettre un message de candidature au candidat émetteur d'ordre supérieur à celui qui vient d'émettre au bout d'un délai correspondant audit délai de candidature d'ordre supérieur après le dernier signal présent sur la ligne;

on incrémente le compteur de chaque module après chaque message signifiant et chaque message de candidature émis après un délai de candidature d'ordre supérieur;

on laisse émettre un message de candidature au candidat émetteur d'ordre inférieur à celui qui vient d'émettre, après un délai de candidature d'ordre inférieur après le dernier signal présent sur la ligne; et

on réinitialise le compteur de chaque module après un message de candidature émis après un délai de candidature d'ordre inférieur, en sorte que le premier module dans l'ordre est autorisé à émettre un message signifiant.

La présente invention a également pour objet un réseau mettant en oeuvre le procédé de transmission de données telles que succinctement exposées ci-dessus, ainsi que plusieurs modules utilisables pour constituer un réseau selon la présente invention.

Grâce à ces dispositions, et notamment au séquencement des émissions des modules par les délais entre messages ou signaux, la présente invention pallie les inconvénients rappelés plus haut.

On notera tout d'abord que le nombre de modules connectables à un réseau selon la présente invention, n'a pas de limite théorique. La ligne banalisée de transmission peut être constituée par un quelconque réseau, en particulier réseau de transfert d'énergie sous forme de courant continu ou alternatif ou même réseau spécialisé pour les transmissions de données.

Dans le cas de l'emploi d'un réseau de transmission d'énergie comme ligne de transmission banalisée, le procédé de transmission selon l'invention alors mis en oeuvre s'avère facilement adaptable aux caractéristiques propres à ce réseau de distribution d'énergie. En tout état de cause, le réseau de transmission de données selon la présente invention est indépendant d'une fréquence horloge devant être générée par exemple à partir de la fréquence du réseau de transmission d'énergie utilisée.

Les collisions entre messages signifiants sont totalements évitées puisque le procédé de transmission de données suivant la présente invention est du genre dans lequel chaque module contrôle l'absence de signal sur la ligne avant d'émettre et n'émet que dans ce dernier cas. Seuls quelques signaux tels que les messages de candidature peuvent être émis simultanément dans le cas du fonctionnement normal. Par ailleurs, dans les plages prévues pour l'émission de ces signaux, le moment exact des émissions est déterminé, suivant une autre caractéristique de la présente invention, de façon aléatoire, ce qui limite encore plus les risques de collision quand ils existent.

Un autre objet de la présente invention est, tout à la fois, d'obtenir une vitesse élevée de transmission des signaux et d'immuniser autant que possible le réseau aux perturbations existant sur la ligne de transmission banalisée, d'autant plus, que suivant un mode de réalisation préféré de l'invention, ladite ligne de transmission est constituée par un réseau de distribution d'énergie électrique 110—220 V. 50—60 Hz, un tel réseau étant particulièrement perturbé.

Aussi, selon un mode de réalisation de l'invention, particulièrement avantageux, le procédé de transmission est caractérisé en ce que les messages sont, au moins en partie, composés d'impulsions dites actives modulant une onde porteuse à fréquence unique pour tous les modules formant ainsi des signaux dits actifs, et en ce qu'en combinaison:

on élimine les signaux de durée inférieure à une durée prédéterminée survenant pendant chaque intervalle de temps entre signaux actifs,

on choisit une durée de signal actif sensiblement supérieure à celle de ladite durée prédéterminée,

on code les etats logiques par variation de l'intervalle de temps entre signaux actifs.

Selon une autre caractéristique de cet aspect de l'invention, à la démodulation, pour déterminer le temps écoulé entre signaux actifs consécutifs, on mesure le temps écoulé entre les fronts arrière desdits signaux. On peut ainsi discriminer de façon précise les états logiques, par exemple les états "0" et "1".

Les modules mettant en oeuvre cet aspect de l'invention sont notamment caractérisés en ce qu'ils comportent des moyens pour éliminer les signaux de durée inférieure à une durée prédéterminée survenant pendant l'intervalle de temps entre les signaux actifs; des moyens générateurs de signal actif de durée sensiblement supérieure à celle de ladite durée prédéterminée; des moyens adaptés à coder des états logiques par variation de l'intervalle de temps entre signaux actifs.

Suivant un mode de réalisation préféré, les modules comportent en outre des moyens adaptés à mesurer le temps écoulé entre les fronts dits "arrière" des signaux démodulés.

Un autre objet de la présente invention est de pouvoir tout à la fois constituer un réseau comportant un nombre quelconque de modules, ce nombre pouvant varier par exemple entre quelques unités et plusieurs centaines, tout en optimisant le rendement énergétique des signaux actifs.

Suivant une autre caractéristique avantageuse du procédé selon l'invention, on s'arrange pour que l'impédance mesurée depuis la ligne de l'interface modulateurligne soit résistive à la fréquence de l'onde porteuse; pour qu'elle soit faible pendant l'émission de signaux actifs et élevée en dehors de l'émission.

Les modules mettant en oeuvre cet aspect de l'invention comportent un modulateur et sont notamment caractérisés en ce que le modulateur est raccordé à un circuit de couplage-ligne comportant un circuit résonnant série en série avec un circuit résonnant parallèle accordés à la fréquence de l'onde porteuse et en ce que le modulateur comporte un moyen générateur de signal alternatif de fréquence correspondant à la fréquence de l'onde porteuse dont l'impédance est faible dès lors qu'un signal actif est généré et élevée dans le cas contraire.

Grâce à ces dispositions, le réseau suivant l'invention peut recevoir un nombre quelconque de modules, et le raccord de modules supplémentaires à un emplacement donné du réseau n'entraîne pas, notamment, d'augmentation notable de l'atténuation des signaux actifs à cet emplacement.

Les caractéristiques énumérées ci-dessus permettent d'obtenir un réseau de communications de données numériques particulièrement souple d'emploi et bien adapté aux fonctions de télécommande et de télémesure.

Un autre aspect de la présente invention est l'application d'un réseau de transmission de données numériques tel que celui exposé succinctement ci-dessus au domaine domestique et, plus particulièrement, au domaine de la distribution de l'énergie électrique dans une habitation, un ensemble d'habitations ou un ensemble de bureaux.

Selon cet aspect de la présente invention, en miniaturisant lesdits modules adressables, par exemple par intégration, il est possible d'en associer un à chaque appareil raccordé à un réseau électrique et commandé, dans la vie courante, au moyen d'interrupteurs ou de télérupteurs. Ces appareils peuvent être, par exemple, des lampes, des stores électriques, des climatiseurs, etc.

D'autres modules adressables selon la présente invention remplacent alors les actionneurs utilisés tels que les interrupteurs ou les télérupteurs. L'ensemble de ces éléments est raccordé au réseau de distribution d'énergie électrique, tandis qu'un processeur central est également raccordé au réseau d'énergie électrique.

La commande des diverses lampes et autres éléments se fait alors par l'intermédiaire desdits modules et du processeur, les modules associés à ces lampes et autres éléments étant adaptés à commander un relais ou un ensemble de relais commandant à leur tour la mise sous tension de la lampe ou de l'élément d'électroménager considéré.

Cette application permet une économie considérable dans la réalisation d'un réseau de distribution d'énergie électrique domestique puisque, par exemple, les va-etvient et les câbles de liaison vers les télérupteurs sont supprimés.

En fait, grâce à cette application d'un réseau selon la présente invention, il est possible de "remplacer" un réseau domestique classique par un réseau "programmé" dans le processeur, ce réseau pouvant bien entendu être modifié facilement par l'utilisateur en modifiant le programme du processeur.

On réalise ainsi, dans le domaine de la distribution d'énergie électrique domestique, des économies comparables à celles qui ont pu être réalisées en électronique en passant des logiques "câblées" aux logiques "programmées".

Les caractéristiques et avantages de la présente invention ressortiront d'ailleurs de la description qui va suivre faite en référence aux dessins annexés sur lesquels:

la figure 1 est une vue schématique générale d'un réseau selon la présente invention;

la figure 2 est un schéma de principe d'un module selon la présente invention;

les figures 3 et 4 représentent une série de diagrammes des temps destinés à illustrer le procédé de modulation-démodulation selon la présente invention;

la figure 5 est un schéma de principe d'une interface d'alimentation et de contrôle ligne d'un module selon la présente invention;

la figure 6 est un schéma explicatif représentant l'impédance de ligne et celle des modules destiné à expliquer un aspect du procédé de modulation-démodulation selon la présente invention;

la figure 7 est un schéma de principe du modulateur;

la figure 8 est un diagramme de phase de ce modulateur;

la figure 9 est un schéma de principe du démodulateur;

la figure 10 est un diagramme en fréquence illustrant certaines caractéristiques du démodulateur;

la figure 11 est un diagramme de phase de ce même démodulateur;

la figure 12 est un schéma de principe illustrant les fonctions d'un organe de codage-décodage ligne d'un module selon la présente invention;

les figures 13 illustrent les signaux élémentaires utilisés dans le présent exemple de réalisation d'un réseau selon la présente invention;

les figures 14 illustrent les signaux composites utilisés dans ce réseau et obtenus à partir des signaux élémentaires illustrés en figures 13;

les figures 15 illustrent quelques éléments de messages émis par les modules selon la présente invention;

les figures 16 illustrent des types de messages émis par ces mêmes modules;

la figure 17 illustre la composition d'un message de données émis par un module selon la présente invention;

les figures 18 à 21 sont des schémas de principe d'organes en logique câblée que comporte l'organe de décodage de données que comporte le mode de réalisation décrit ici du codeur-décodeur ligne associé à chaque module;

les figures 22, 23 sont des schémas fonctionnels d'organes réalisés en logique câblée que comporte l'organe de calcul du temps que comporte le codeur-décodeur ligne;

la figure 24 est un schéma fonctionnel de l'organe de codage des données réalisé en logique câblée que comporte le codeur-décodeur ligne;

la figure 25 est un schéma fonctionnel réalisé en logique câblée de l'organe de comptage des silences que comporte le codeur-décodeur ligne;

la figure 26 illustre, de façon schématique, l'application d'un réseau selon la présente invention au domaine de la distribution d'énergie électrique dans une habitation.

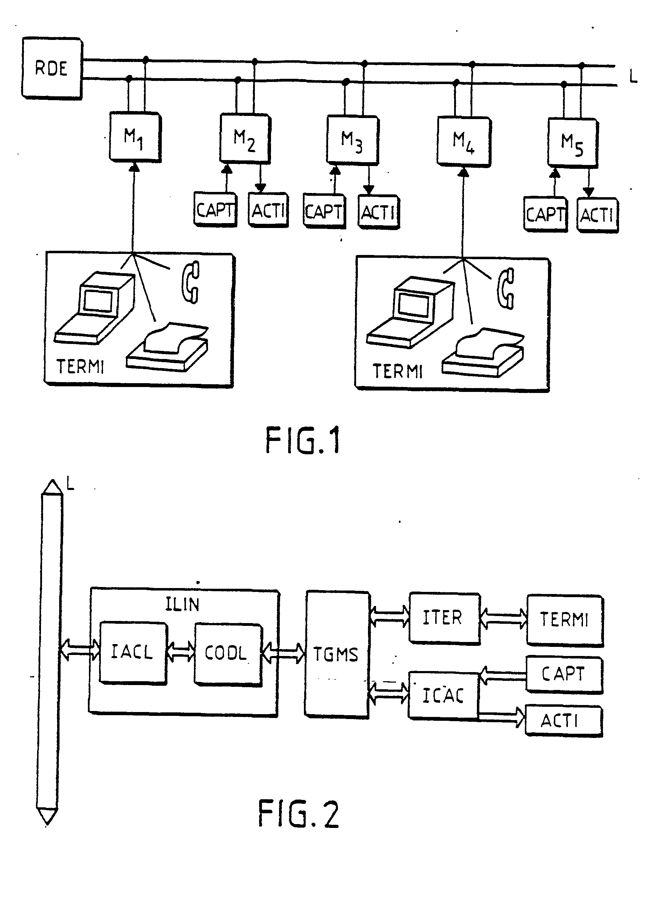

On va maintenant décrire à l'appui des figures 1 à 25, un mode de réalisation d'un réseau selon la présente invention. Dans cet exemple, les modules adressables constituant ce réseau, sont réalisés en logique câblée. Il va de soi que les enseignements de cette description peuvent être utilisés par un homme de l'art pour réaliser ces modules en logique programmée, par exemple en utilisant un microprocesseur tel que l'un des modèles de la famille MC 6800 commercialisé par MOTOROLA.

La description du mode de réalisation choisi et représenté aux figures 1 à 25 est divisée en trois parties:

généralités sur le réseau;

modulation-démodulation des signaux sur la ligne;

codage-décodage des signaux.

### GENERALITES SUR LE RESEAU

De façon générale, dans le mode de réalisation représenté, un réseau comporte essentiellement (figure 1):

des lignes d'alimentation et de transmission (L);

des modules de transmission de données numériques, de télécommande et de télémesure $(M_1, M_2, \ldots M_n)$;

des terminaux de commande intelligents (TERMI);

des actionneurs et des capteurs (ACTI et CAPT).

Les lignes d'alimentation et de transmission sont ici constituées par le réseau de distribution d'énergie RDE 115 ou 220 volts alternatifs, 50 ou 60 Hz, sur lesquels des modules peuvent être connectés à n'importe quel emplacement et à n'importe quel moment, en parallèle: le réseau RDE est en fait une ligne de transmission banalisée. Il va de soi que, dans d'autres modes de réalisation non décrits, les lignes d'alimentation et de transmission peuvent être constituées par n'importe quel réseau approprié.

Les modules de transmission (figure 2) sont constitués par tout ou partie des cinq sous-ensembles suivants:

Interface d'Alimentation et de Contrôle Ligne (IACL);

Codage-Décodage des émissions Ligne (CODL);

Traitement et Gestion des messages (TGMS);

Interface des Terminaux intelligents (ITER);

Interface avec des Capteurs et des Actionneurs (ICAC).

Les moyens communs à tous les modules, qui permettent d'assurer la totalité des caractéristiques définies précédemment, constituent l'Interface Ligne (ILIN), composé de IACL et CODL.

Il est défini:

des modules de communication COM constitués par les sous-ensembles IACL, CODL, TGMS et ITER;

des modules satellites SAT constitués par les sous-ensembles IACL, CODL, TGMS et ICAC;

des modules mixtes COM/SAT, à la fois communication et satellites, constitués par les cinq sous ensembles ci-dessus;

des modules transformateurs répétiteurs REP, constitués de deux groupes IACL et CODL, reliés par TGMS qui permettent d'assurer la continuité des transmissions entre des lignes séparées (cas de deux réseaux de distribution d'énergie).

Un module communicateur COM, suivant l'invention se distingue d'un module satellite SAT, entre autres par le fait qu'il possède des moyens de numérotation (roues codeuses, micro-contacts, strap, mémoire permanente ou semi-permanente par exemple) permettant de lui affecter un numéro m (COM m) alors qu'un module satellite SAT possède des moyens de numérotation permettant, dans ce mode de réalisation, de lui affecter deux numéros: d'une part, son numéro propre n, d'autre part, le numéro m communicateur COM m auquel il est associé: SAT n du COM n° m (SAT n, m). Un module mixte COM/SAT ne se différencie d'un COM que par le fait qu'il comporte un SAT de numéro zéro qui lui est directement lié; COM m et SAT n, m ne peuvent émettre spontanément qu'à des moments privilégiés fonction de l'état de la ligne et de leurs numéros, COM m peut émettre soit à destination d'autres COM m' (m ≠ ≠ m'), soit à destination de chacun des SAT n, m qui lui sont associés par leur numéro commun m, tandis que SAT n, m ne peut émettre qu'à destination du seul COM m qui lui est associé. SAT n, m n'émet normalement que s'il a reçu au préalable une commande nominale de son COM m associé, lui imposant des conditions d'émission; SAT n, m peut cependant, dans des cas très particuliers, et selon un rythme ralenti, émettre spontanément, en l'absence d'instructions de son COM n associé, soit pour se faire connaître s'il n'a pas été initialisé, soit en cas de fonctionnement dégradé pour faciliter le dépannage.

L'interface IACL est constituée par des moyens dont les fonctions de transmission sont les suivantes:

en émission, sur commande de CODL (succession de niveaux 5 volts et de niveau 0 volt de durées déterminées) IACL émet sur la ligne, pendant la présence du niveau 5 volts, un signal périodique centré sur une fréquence porteuse (ici: 90 kHz ± 5 kHz).

Par ailleurs, si l'interface IACL détecte la présence de la fréquence de fonctionnement (dans cet exemple 90 ± 5 kHz), et sur dépassement d'un seuil de niveau d'énergie E et d'un seuil de durée T sur cette fréquence, elle indique CODL la présence de signal (par un niveau 5 volts), ou l'absence de signal (niveau 0 volt). De par les critères de détection, IACL assure un contrôle de cohérence au premier niveau. CODL est constitué par des moyens dont les fonctions sont les suivantes:

contrôle et décodage de la réception du signal;

mesure des délais sans signaux (nombre de silences), détection des débuts de message, décodage des bits élémentaires, contrôle de cohérence à un second niveau, calcul de la vitesse de réception, calcul d'une vitesse d'émission commune à tout le réseau;

contrôle et codage des émissions: calcul du délai aléatoire de début d'émission, structuration et émission des bits élémentaires, contrôle des collisions.

MODULATION-DEMODULATION DES SIGNAUX
Description de l'interface d'alimentation et de contrôle ligne (IACL)

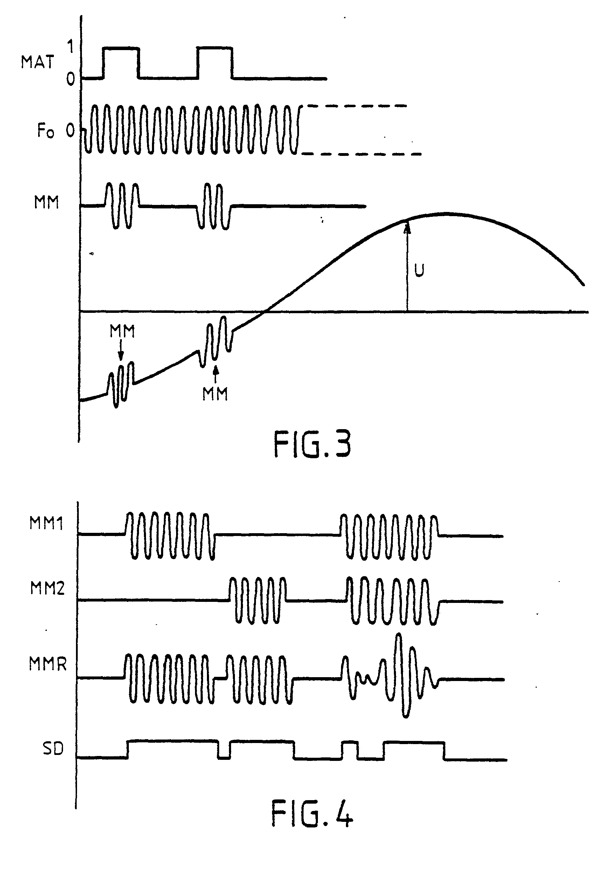

Le mode de transmission utilisé dans cet exemple, fait appel à l'utilisation d'un courant porteur dont la fréquence est située dans la gamme des fréquences autorisées de 10 à 150 kHz. Ici, cette fréquence a eté choisie telle que $F_o = 90$ kHz. Aux fréquences inférieures, les réseaux de distribution sont perturbés à haut niveau par des appareillages: thyristors, télévisions, alimentations à découpage, dont la fréquence fondamentale s'étend de 100 Hz à 20 kHz environ, mais dont le spectre est riche en harmoniques. Aux fréquences supérieures, l'atténuation des lignes est importante et exige des puissances d'émission élevées. La fréquence porteuse $F_o$ (figure 3) est à modulée en amplitude à 100% de modulation par les messages à transmettre MAT réalisant ainsi le message modulé MM qui est superposé à la tension U du réseau de distribution d'énergie. Dans les vitesses de transmission utilisées dans cet exemple, la fréquence fondamentale maximale est de l'ordre de 1500 Hz. Une transmisson correcte, respectant une forme d'onde sensiblement rectangulaire, est assurée en respectant l'harmonique 3 de cette fréquence, soit 4500 Hz. La largeur de bande nécessaire est donc de 9 kHz. Sur une ligne fortement perturbée, la faible largeur de bande imposée par la modulation d'amplitude est favorable à l'amélioration du rapport signal sur bruit. Le choix de la modulation d'amplitude simplifie la détection d'une collision entre deux émissions MM1 et MM2 (figure 4) car on obtient une addition pure et simple des amplitudes au niveau du message reçu (MMR) donnant lieu à un signal démodulé (SD) dont le diagramme des temps est anormal. CODL ne reconnaît pas le message et l'élimine. Dans le cas où il reçoit un message, si CODL était en train d'émettre l'un des messages MM1 ou MM2 causant ainsi la collision, il cessera d'émettre spontanément.

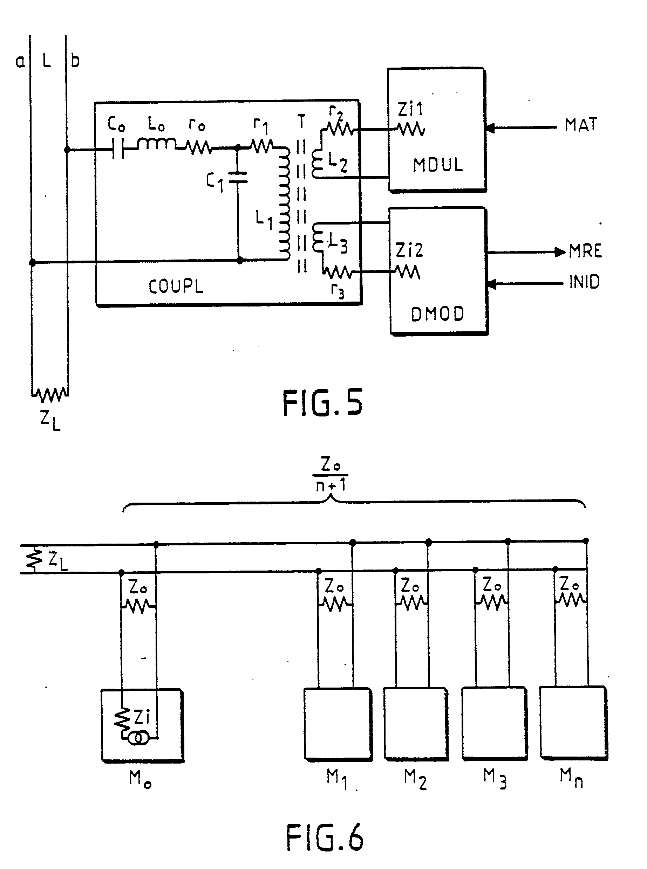

L'interface IACL (figure 5) se compose de trois sous-ensembles qui sont les suivants:

le coupleur de ligne (COUPL);
le modulateur (MDUL);
le démodulateur (DMOD).

Le coupleur de ligne (COUPL) est relié, d'une part, à la ligne, d'autre part, au modulateur qui lui fournit les messages à émettre (MME) et au démodulateur (DMOD) auquel il fournit les messages modulés reçus (MMR). Le modulateur (MDUL) est relié à CODL qui lui fournit les messages à transmettre (MAT). Le démodulateur est relié à CODL à qui il fournit les messages reçus (MRE) et duquel il reçoit des commandes d'inhibition (INID).

D'une manière générale, selon l'invention, on s'arrange pour que l'impédance mesurée depuis la ligne L de l'interface IACL modulateur MDUL — ligne L soit résistive à la fréquence Fo de l'onde porteuse; pour qu'elle soit faible pendant l'émission de signaux actifs SA et élevée en dehors de l'émission.

Le coupleur de ligne COUPL (figure 5) est dans la forme de réalisation représentée, selon cet aspect de l'invention, constitué comme suit: l'élément principal du coupleur de ligne est un transformateur T à trois enroulements à couplage serré qui assure une isolation galvanique totale de la ligne par rapport au modulateur et au démodulateur. Le primaire, constitué par la bobine $L_1$ de résistance interne $r_1$ est accordé sur la fréquence porteuse $F_o$ par un condensateur $C_1$. Le circuit oscillant $L_1C_1$ ainsi constitué est connecté à la ligne via une bobine $L_o$ de résistance interne $r_o$ en série avec un condensateur $C_o$. Le circuit oscillant $L_oC_o$ est accordé sur la fréquence $F_o$ (ici $F_o = 90$ kHz). Le condensateur $C_o$ a pour but de couper la composante continue ou alternative basse fréquence (50 ou 60 Hz) de la ligne lorsque celle-ci constitue un réseau de distribution d'énergie. La bobine $L_o$ a pour but de compenser la réactance capacitive du condensateur $C_o$ et de former avec le condensateur $C_o$ un filtre passe bande centré sur la fréquence $F_o$. Les éléments $L_o$, $C_o$, $L_1$, $C_1$ sont déterminés de telle sorte que pour la fréquence $F_o$, l'impédance $Z_o$ du coupleur COUPL, vue de la ligne L est de la forme suivante au deuxième ordre près:

$$Z_o = r_o + \frac{L_1}{r_1\, C_1}$$

la réactance de $L_o$ compensant la capacitance de $C_o$ à la fréquence $F_o$.

L'impédance du circuit $L_o$, $C_o$ est donc presque nulle, tandis que celle du circuit $L_1C_1$ est très élevée.

L'impédance $Z_o$ est donc, en pratique, voisine de celle du circuit $L_1C_1$.

Par cette disposition, l'impédance $Z_o$ est purement résistive et élevée, réduisant le courant de ligne au minimum et, par là même, les chutes de tension le long de la ligne. Lorsqu'un module $M_o$ (figure 6) émet sur la ligne vers "n" modules ($M_1$, $M_2$, $M_3$, $M_n$) dont les impédances vues de la ligne sont $Z_o$, le module émetteur est chargé par une impédance $Z_1$ globale telle que:

$$Z_1 = \frac{\dfrac{Z_o}{n+1} \times Z_L}{\dfrac{Z_o}{n+1} + Z_L}$$

où $Z_o$ est l'impédance d'un module, "n" le nombre de modules et $Z_L$ l'impédance de la ligne. $Zi_1$ étant l'impédance interne du modulateur (MDUL) du module émetteur, l'atténuation du signal de porteuse est de la forme:

$$G = \frac{Z_1}{Z_i + Z_1}$$

L'atténuation G devant être minimale, le modulateur présente par construction une faible impédance $Z_i$ et une grande impédance $Z_o$ de telle sorte que l'impédance $Z_1$ soit la plus élevée possible.

Le modulateur MDUL (figure 5) assure les fonctions suivantes:

mélange du signal à émettre et de la porteuse;

commande de la ligne en basse impédance au cours d'une émission;

passage en haute impédance en dehors d'une émission pour ne pas charger la ligne.

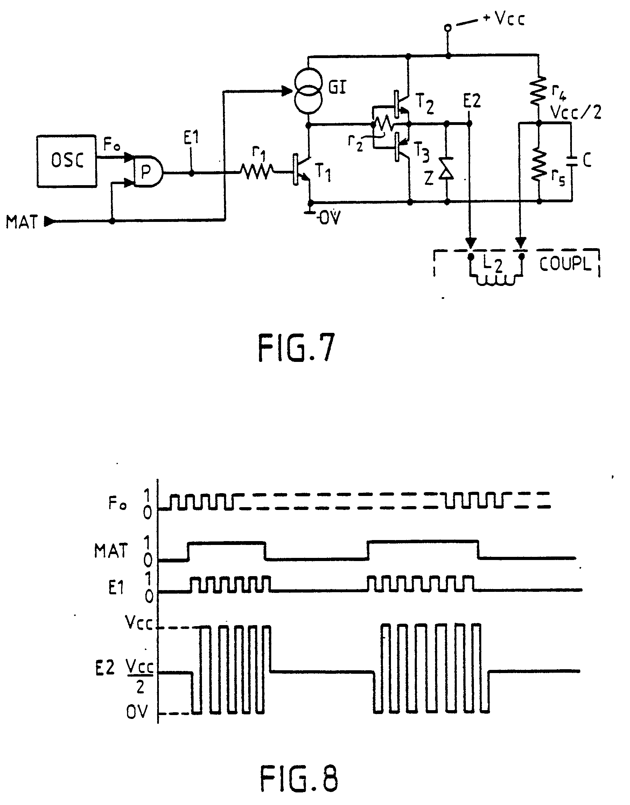

La structure schématique du modulateur est donnée en figure 7 et le diagramme de phase en figure 8.

La fréquence porteuse ($F_o$) d'un oscillateur (OSC) est modulée par le message à transmettre (MAT) par l'intermédiaire d'une porte logique P qui réalise la fonction ET donnant lieu au signal E1. La porte P commande un transistor $T_1$ dont le collecteur est chargé par une source de courant GI mise en service par le signal de données.

Les transistors $T_2$ et $T_3$ montés en collecteurs communs commandent la bobine de ligne $L_2$ du coupleur (COUPL) en basse impédance. L'autre extrémité de la bobine $L_2$ est reliée à un diviseur de tension constitué par les résistances $r_4$ et $r_5$ découplées par un condensateur C. Le potentiel de la source étant Vcc, le potentiel moyen de la bobine est

$$\frac{Vcc}{2}$$

La modulation donne lieu à un signal carré ($E_2$) sur la bobine oscillant entre:

$$Vcc - \frac{Vcc}{2} = \frac{Vcc}{2} \text{ et } 0 - \frac{Vcc}{2} = -\frac{Vcc}{2}$$

Lorsque le signal du message à transmettre passe à 0 volt, le transistor $T_1$ et la source de courant GI sont bloqués. Par ailleurs, la résistance $r_2$ impose un potentiel aux bases de $T_2$ et $T_3$ tel que $T_2$ et $T_3$ sont bloqués. L'impédance de sortie du modulateur devient donc très élevée et la ligne n'est pas chargée, dès lors que l'émission a cessé.

Les messages qui peuvent être reçus d'un autre émetteur donnent lieu à un signal aux bornes de $L_2$. Etant donné la présence du diviseur de tension, le signal oscille entre +Vcc et 0 volt au maximum, évitant toute mise en conduction de $T_2$

ou $T_3$ qui amortirait la ligne. La diode Zener Z a pour rôle la protection de l'étage $T_2$, $T_3$ en cas de perturbation du réseau.

On observera que l'ensemble des trois transistors $T_1$, $T_2$, $T_3$, de la source de courant GI et de l'oscillateur OSC constituent une forme particulière de réalisation d'un moyen générateur de signal alternatif de fréquence $F_o$ dont l'impédance est faible dès lors qu'un signal est généré et élevée dans le cas contraire.

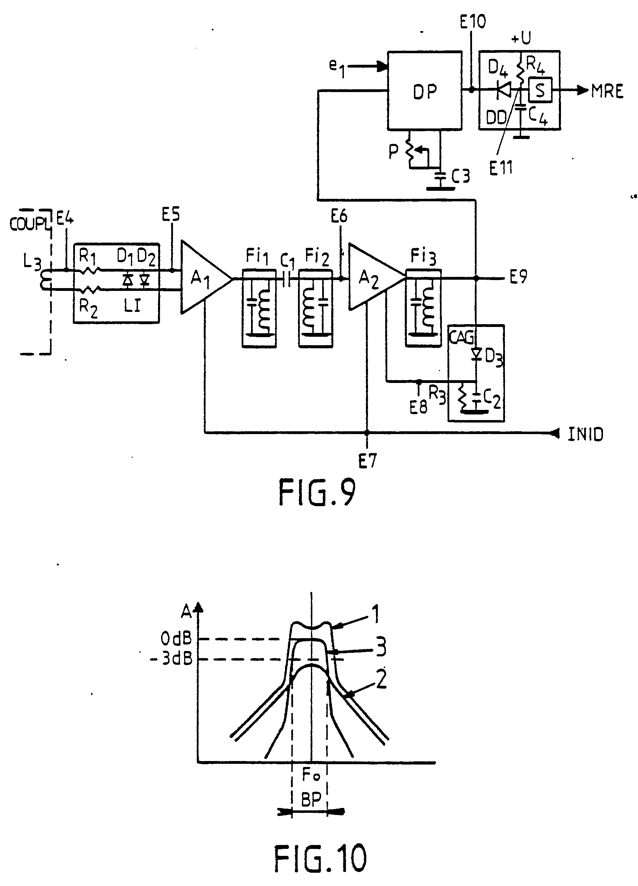

Le démodulateur (DMOD) (figure 9) assure les fonctions suivantes:

limitation d'amplitude (LI);

amplification et filtrage de la bande de fréquence ($A_1$, $A_2$, $Fi_1$, $Fi_2$, $Fi_3$);

verrouillage réception ($A_1$ et $A_2$);

régulation de niveau de signal ($A_2$ et CAG);

discrimination de porteuse (DP);

discrimination de durée (DD).

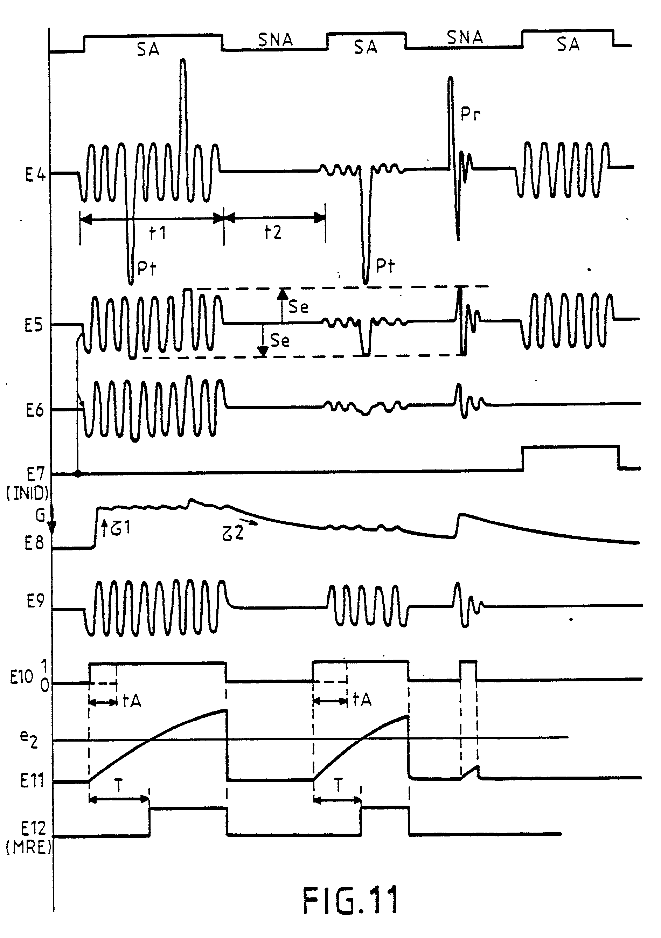

La figure 11 montre le diagramme de phase.

Limitation d'amplitude: elle a pour but de protéger l'amplificateur $A_1$ d'entrée contre les perturbations ($P_t$) de la ligne. Deux diodes $D_1$ et $D_2$ montées en opposition deviennent conductrices lorsque le signal ($E_4$) atteint le seuil (Se) de 0,7 volt crête. Les résistances $R_1$ et $R_2$ limitent le courant d'écrêtage.

Amplification et filtrage: l'amplificateur $A_1$ préamplifie le signal ($E_5$) et commande deux filtres passebande $Fi_1$ et $Fi_2$ couplés par le condensateur $C_1$ avec un couplage légèrement supérieur au couplage critique donnant la bande passante "1" (figure 10). Le signal ($E_6$) est alors partiellement filtré et les perturbations atténuées. Le signal ($E_6$) est amplifié par l'amplificateur $A_2$ associé au filtre de bande $Fi_3$ dont la bande passante "2" (figure 10) associée à la bande passante "1" (figure 10) donne la bande passante "3" (figure 10) et la largeur de bande BP (figure 10) du démodulateur.

Verrouillage réception: lorsque le modulateur (MODUL) est en émission sur ordre de CODL, ce dernier commande le signal d'inhibition INID (E7) du démodulateur. Les amplificateurs $A_1$ et $A_2$ sont bloqués en gain nul pour éviter l'auto-réception du signal à fort niveau du modulateur. Dans ce cas, les filtres $Fi_1$, $Fi_2$, $Fi_3$ n'emmagasinent pas d'énergie et lorsque le modulateur cesse d'émettre, le démodulateur conserve sa sensibilité maximale pour détecter les émissions des autres modules.

Régulation de niveau: un circuit de contrôle automatique de gain (CAG) détecte l'enveloppe de la porteuse par un circuit constitué de la diode $D_3$, de la résistance $R_3$ et du condensateur $C_2$ dont la constante de temps est $\tau_1$ à l'établissement du signal et $\tau_2$ à l'extinction du signal avec $\tau_2 > \tau_1$. Le signal enveloppe (E8) est appliqué à la commande de gain de l'amplificateur $A_2$ de telle sorte que lorsque le signal enveloppe (E8) augmente en amplitude, le gain de $A_2$ diminue. Il s'ensuit une compression de l'amplitude telle que la dynamique du signal (E9) est réduite. Dans l'application présente, une variation de niveau de 30 dB au niveau de la ligne (cas d'un émetteur proche et d'un émetteur éloigné) se traduit par une variation de 6 dB en sortie de l'amplificateur $A_2$ (E9). La constante de temps $\tau_2$ donne lieu à une réduction du gain dans l'intervalle qui sépare les trains d'ondes et donc à une meilleure immunité aux perturbations du réseau dans le cours d'un message. La commande de blocage (INID) évite la saturation de l'étage CAG, pour bénéficier de la sensibilité maximale du démodulateur après une émission de son modulateur associé.

Discrimination de porteuse (DP): un décodeur de tonalité compare la phase du signal reçu ($E_9$) avec la phase d'un oscillateur interne dont la fréquence est asservie par le signal entrant ($E_9$), à condition qu'il ait un niveau supérieur à un seuil "$e_1$". L'oscillateur interne est calé au repos à la fréquence $F_o$ par un potentiomètre P et un condensateur $C_3$. Lorsque le signal se situe à une fréquence $F_o \pm \triangle F$, le décodeur de tonalité fournit un signal "présence porteuse" ($E_{10}$) assurant la démodulation du message. Le temps que met l'oscillateur pour se mettre en phase avec le signal ($E_9$) est aléatoire et donne une incertitude TA (figure 11).

Discriminateur de durée (DD): lorsqu'une perturbation se produit sur la ligne telle qu'un transitoire de commutation à large spectre, mais de courte durée, le discriminateur de porteuse peut détecter le signal dans la bande BP autour de $F_o$, mais le phénomène est de courte durée.

Le principe utilisé pour s'affranchir de ce phénomène consiste à vérifier la présence du signal pendant une durée prédéterminée T minimum sans interruption.

D'une manière générale, suivant une caractéristique particulièrement avantageuse de l'invention, pour avoir une vitesse de transmission rapide tout en s'assurant une bonne immunité aux perturbations (figure 11):

on élimine les signaux $P_t$ de durée inférieure à une durée prédéterminée T survenant pendant chaque intervalle de temps $t_2$ entre signaux actifs SA;

on choisit une durée t de signal actif SA sensiblement supérieure à celle de ladite durée prédéterminée T;

on code les états logiques par variation de l'intervalle de temps $t_2$ entre signaux actifs SA.

Suivant la forme de réalisation particulière représentée, un circuit intégrateur est constitué par une résistance $R_4$, un condensateur $C_4$, et une diode $D_4$. Le condensateur se charge normalement sous une tension U. Lorsque le signal est nul en sortie du discriminateur de fréquence DP, le signal de l'intégrateur est nul ($E_{11}$). Dans l'autre cas, le condensateur se charge pendant la durée du signal $E_{10}$.

Un détecteur de seuil S bascule lorsque le signal $E_{11}$ dépasse un seuil "$e_2$" au bout d'un temps T. La sortie du détecteur de seuil constitue le message de réception MRE. Cette configuration impose au signal actif (SA) (figure 11) une durée au moins égale à T (figure 11). Le signal perturbateur $P_t$ de durée inférieure à T est éliminé.

Grâce à ces dispositions:

la vitesse de transmission la plus élevée pour un filtrage de durée T est obtenue en choisissant un codage de l'information tel que la durée $t_1$ (figure 11) du signal actif est constante et légèrement supérieure à T. Ainsi, suivant une caractéristique de l'invention décrite plus loin, le codage d'un état "0" ou "1" peut s'effectuer par variation du signal non actif SNA (figure 11) de durée $t_2$ constitué par le silence entre deux signaux actifs;

le front avant du signal MRE ($E_{12}$) apparaît à un instant $T + tA$ à partir du début du signal SA ($E_4$) dans lequel T peut présenter des dérives et $t_A$ est aléatoire comme il a été vu, tandis que le front arrière du signal MRE n'est retardé par rapport au front arrière de SA que d'un temps court dû à la désexcitation de la ligne.

Suivant une caractéristique de l'invention pour déterminer le temps écoulé entre signaux actifs SA consécutifs, afin de décoder les états logiques, on mesure le temps écoulé entre les fronts arrière de signaux MRE consécutifs.

Le processus de décodage, autre caractéristique de l'invention, est explicité plus loin dans le chapitre "Codage-décodage des signaux".

Un signal n'est reconnu comme signal utile que s'il remplit les conditions suivantes:

fréquence comprise entre $F_o - BP/2$ et $F_o + BP/2$;

niveau d'énergie supérieur au seuil "$e_1$" du discriminateur de porteuse et ce, pendant un temps au moins égal à T.

La combinaison des critères ci-dessus indiqués confère à IACL une haute immunité aux perturbations de la ligne constituant ainsi un premier contrôle de cohérence des informations, CODL réalisant par la suite d'autres contrôles.

## CODAGE-DECODAGE DES SIGNAUX
### Description du Codage et Décodage Ligne (CODL)

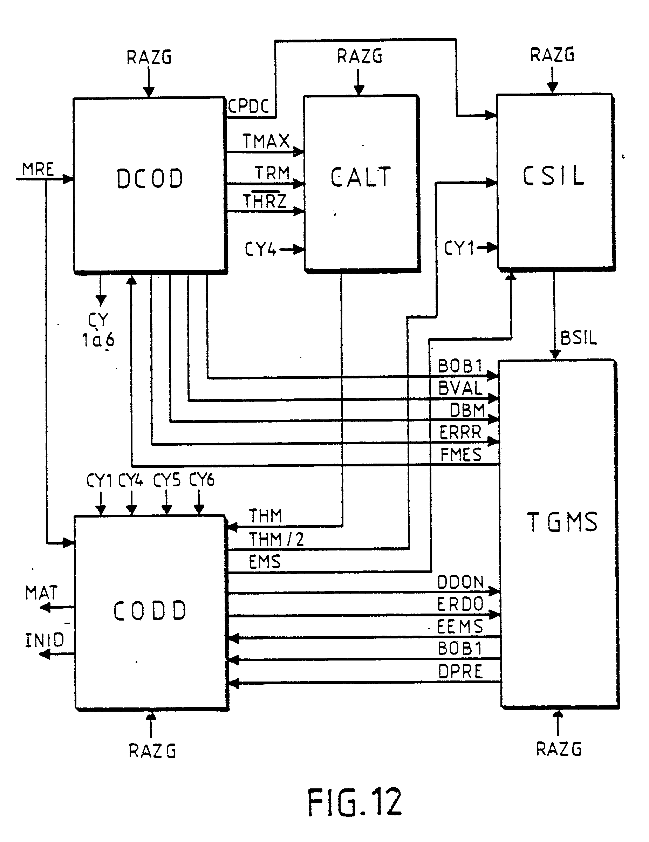

La fonction codage-décodage ligne CODL se décompose en quatre fonctions élémentaires qui sont, figure 12:

décodage de données: DCOD

calcul du temps: CALT

codage des données CODD

comptage des silences, ou temps de silence, CSIL.

Avant de décrire les quatre fonctions ci-dessus, les principaux signaux employés dans cet exemple illustrant une forme particulière du procédé selon l'invention, mis en oeuvre par un réseau selon l'invention, vont être brièvement exposés ci-après.

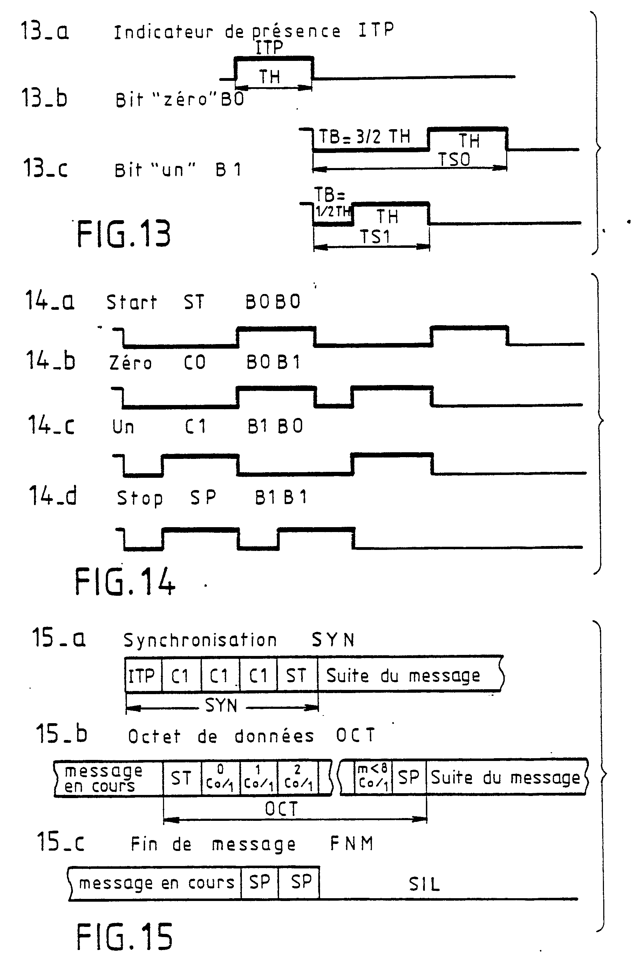

Les signaux élémentaires (figure 13), constituent le contenu des messages. Ils sont composés de l'absence de signal pendant un temps TB (pas de fréquence porteuse sur la ligne) puis de la présence de signal pendant un temps TH (fréquence porteuse sur la ligne). Ces séquences représentent: un "0" élémentaire (B0) si $TB = 3/2$ TH, aux tolérances près (figure 13b); un "1" élémentaire ($B_1$) si $TB = 1/2$ TH, aux tolérances près (figure 13c). Les messages débutent toujours par un indicateur de présence ITP (figure 13a), constitué par la présence de signal pendant un temps TH. Les diverses combinaisons des signaux élémentaires constituent les signaux composites (bits) (figure 14):

un "0" composite C0 est composé de B0 suivi de B1 (figure 14-b);

un "1" composite (C1) est composé de B1 suivi de B0 (figure 14-c). L'information utile est ainsi répétée deux fois, cette redondance permet un contrôle de cohérence des données à un niveau supérieur.

Deux autres signaux composites sont générés ou reconnus:

un "START" (ST) composé de deux B0 successifs (figure 14-a);

un "STOP" (SP) composé de deux B1 successifs (figure 14-d). Ces deux derniers bits composites servant au séquencement des émissions. Une émission est une succession ininterrompue de bits composites, et appartenant à un même émetteur.

Par opposition aux signaux ou messages dits "de service" qui concernent le fonctionnement interne du réseau, on définit des messages dits "signifiants" comportant des données devant être traitées et interprétées en dehors du réseau.

Une émission de message signifiant comporte un début d'émission SYN (figure 15a) composé d'un ITP suivi d'au moins trois C1, suivi d'un ST. Cette combinaison caractérise de façon unique un début d'émission SYN; elle permet:

commençant par ITP, de détecter un début d'émission;

de recaler un récepteur de façon unique, même au milieu d'un SYN dès l'arrivée du ST de fin de SYN (cas d'émission simultanée de deux émetteurs ou de parasites dans le début d'émission);

de détecter parasite ou émission simultanée, plus particulièrement pendant les TB de B0 et de ST, pour lesquels les périodes de silence sont les plus longues;

par le nombre important de C1, de détecter les émissions simultanées d'émetteurs ayant des vitesses d'émission différentes, par le décalage introduit;

d'initialiser la mesure de la vitesse moyenne d'émission sur toute la longueur de SYN;

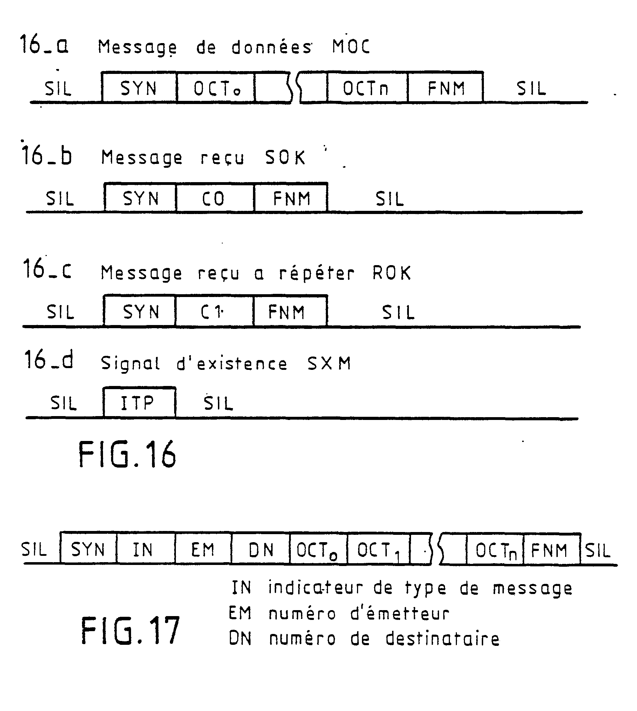

SYN peut être suivi de messages de données numériques binaires (MOC) (figure 16).

Chaque octet OCT peut être de longueur quelconque, débutant par ST et se terminant par SP (figure 15-b), et composé de C0 et de C1. Cette structure, conforme aux formats standards de transmission série, en ce qui concerne les octets (8 bits), facilitent les échanges avec des organes extérieurs.

Une émission peut être composée de plusieurs octets successifs dont la place, à l'intérieur de l'émission, indique une signification précise particulière (voir figure 17 explicitée plus loin).

La fin d'une émission FNM est indiquée par la combinaison SP—SP (figure 15-c) qui suit le SP du dernier octet émis. Cette combinaison caractérise de façon unique un FNM et permet à tout récepteur non parasité de le reconnaître.

Deux autres types de message constituent des indicateurs de service:

SOK (figure 16-b), composé de SYN, C0, FNM, est un accusé de réception d'un module destinataire indiquant que les données significatives transmises ont été correctement reçues et utilisées;

ROK (figure 16-c), composé de SYN, C1, FNM, est un accusé de réception d'un module destinataire indiquant que les données significatives transmises ont bien été reçues, mais qu'elles n'ont pu être utilisées.

La structure de ces deux indicateurs est telle que, en cas d'émissions simultanées anormales (numérotations identiques de deux récepteurs par exemple) c'est l'émetteur de SOK qui détectera le premier la collision et cessera son émission laissant se poursuivre l'émission de ROK. Le B0 du C0 de SOK comporte en effet une première période de silence plus longue que celle du B1 de C1 de ROK, ce qui crée une priorité de fait pour l'indicateur ROK.

Un dernier signal SXM (figure 16-d) réalisé par l'émission d'un seul ITP, constitue un indicateur de présence pour établir avec l'émission d'autres messages, le séquencement des priorités des différents candidats émetteurs, évitant ainsi la collision des messages signifiants. Au sens de la présente invention, on appelle "candidat émetteur" les modules, ici SAT ou COM, ayant un message signifiant à transmettre. Le signal SXM est également appelé, par commodité, "message de candidature". Ce signal est le seul qui puisse être émis simultanément par plusieurs candidats émetteurs, ou perturbé par un parasite sans que son contenu implicite soit modifié.

Ce signal est essentiel au fonctionnement correct de IACL et CODL, en établissant un séquencement des zones inter-émissions et en leur donnant suivant une caractéristique de la présente invention, une signification implicite pour tous les récepteurs. La durée de ces zones inter-émissions (silence SIL), détermine des plages d'émissions de chaque candidat émetteur.

Avant de décrire en détail le séquencement des émissions dans le mode de réalisation du réseau choisi et représenté aux figures et décrit dans la présente description, on va décrire un exemple d'un séquencement d'émission de module, suivant la présente invention, dans un réseau simplifié ne comportant que des modules d'un seul type, par exemple, des modules communicateurs comme COM.

On définit trois intervalles de temps de silence inter-émission ou délais de durée croissante, respectivement, appelés, par commodité: "délai de messages signifiants", "délai de candidature d'ordre supérieur" et "délai de candidature d'ordre inférieur". La durée des silences ou délais est calculée par chaque CODL sur la valeur moyenne THM (figure 13) calculée à partir de la durée des bits élémentaires reçus B0 et B1. Elle est divisée en périodes élémentaires de silence $SIL(1) = 5/2$ THM communes à tout le réseau.

On définit la durée totale d'un silence par un nombre N avec $SIL(N) = N \times SIL(1)$.

Dans cet exemple simplifié, le délai de message signifiant a une valeur correspondant à SIL(8), le délai de candidature d'ordre supérieur à une valeur correspondant à SIL(10) et le délai de candidature d'ordre inférieur a une valeur correspondant à SIL(13).

Chaque module comporte un compteur dont le contenu est représentatif du numéro du module autorisé à émettre, à un instant donné, un message signifiant.

Suivant la présente invention, la durée des délais inter-émissions SIL(N) permet, au moyen de l'organe CODL que comporte chaque module, de séquencer des émissions éventuelles de ces modules comme suit:

on laisse émettre le candidat émetteur autorisé à émettre au bout d'un délai correspondant audit délai de message signifiant, après le dernier signal présent sur la ligne, à savoir, dans cet exemple, un délai de valeur SIL(8);

on laisse émettre un message de candidature SXM au candidat émetteur dont le numéro d'ordre ne suit pas immédiatement le numéro d'ordre du module qui vient d'émettre et dont ce numéro d'ordre est supérieur à celui du module qui vient d'émettre, au bout d'un délai correspondant audit délai de candidature d'ordre supérieur après le dernier signal présent sur la ligne, à savoir au bout d'un délai de valeur SIL(10);

on incrémente le compteur de chaque module après chaque message signifiant et chaque message de candidature SXM émis après un délai de valeur SIL(10);

on laisse émettre un message de candidature SXM au candidat émetteur d'ordre inférieur à celui qui vient d'émettre après un délai de candidature inférieur après le dernier signal présent sur la ligne, à savoir un délai de valeur SIL(13);

on réinitialise le compteur de chaque module après un message de candidature émis après un délai de candidature d'ordre inférieur en sorte que le premier module dans l'ordre est autorisé à émettre un message signifiant.

Le séquencement de ces émissions est assuré, au niveau de chaque module, par CODL qui comporte, comme on le verra dans la suite de la description, des moyens susceptibles de mesurer le temps et de déterminer la valeur des délais inter-émissions.

Grâce au procédé décrit ci-dessus, il y a un cycle d'émissions au cours duquel tous les modules ont l'occasion d'émettre, aucun module n'est avantagé par rapport à un autre, puisqu'une fois qu'un module a terminé son émission, émission qui peut être limitée dans le temps, les modules de numéro d'ordre supérieur ont l'occasion d'émettre. Dès que le candidat d'ordre le plus élevé a émis son message, le temps s'écoule et au bout d'un délai de valeur SIL(13), les candidats émetteurs d'ordre inférieur tentent d'émettre SXM, les compteurs ayant été réinitialisés. On s'aperçoit que, grâce à ce système, les modules des numéros d'ordres élevés ne sont pas favorisés par rapport aux modules de numéros d'ordres plus faibles et vice versa.

On notera que la seule "collision d'informations" pouvant survenir est celle pouvant avoir lieu entre plusieurs messages de candidatures SXM émanant de plusieurs modules de rangs plus élevés que le module autorisé à émettre. On a déjà vu que ce signal est le seul qui puisse être émis simultanément ou perturbé par un parasite sans que son contenu implicite en soit modifié puisqu'il s'agit d'un signal élémentaire ITP constitué par la présence de signal pendant un temps TH. On décrira plus loin comment en pratique, dans la forme de réalisation décrite en détail dans cette demande, le risque de collision de divers signaux SXM est, malgré tout, évité.

On va maintenant décrire le séquencement des émissions dans un réseau tel que celui décrit dans la présente demande comportant des modules communicateurs COM et des modules satellites SAT.

Chaque communicateur COM est différencié par un numéro "m" (COMm) et chaque satellite SAT par son numéro propre "n" et le numéro "m" de son communicateur associé:

SATn,m: SAT numéro "n" associé au COMm. Chaque COMm ou SATn,m émet, suivant une caractéristique particulièrement avantageuse de la présente invention, dans une plage ESIL(N) qui lui est réservée et qui est définie comme suit:

$$ESIL (N) = SIL (N) + K + ALEA$$

avec $K = -3/8$ THM et ALEA une valeur aléatoire pour CODL telle que $0 < ALEA < 5/4$ THM.

Suivant une caractéristique de l'invention, on séquence les émissions des SAT associés à un COM donné au moyen de délais, qui sont alors appelés, par commodité, "secondaires" et qui peuvent être, soit des délais de messages signifiants, soit des délais de candidats d'ordre supérieur. De même, on séquence les émissions des communicateurs au moyen de délais qui sont alors appelés "primaires" et qui peuvent aussi être, soit des délais de messages signifiants, soit des délais de candidats d'ordre supérieur. On s'arrange pour que, d'une manière générale, les satellites associés à un communicateur donné aient tous eu l'occasion d'émettre un message avant de passer aux communicateurs d'ordre supérieur et à leurs satellites associés. Le tableau I ci-dessous expose le séquencement des émissions par les délais entre messages SIL (N), la durée d'un délai SIL (N) étant déterminée comme précédemment par la formule

$$SIL (N) = N \times SIL (1).$$

### TABLEAU I
### Séquencement des émissions

**SIL (13):**
délai de fin de cycle également appelé délai de candidature d'ordre inférieur. Les compteurs des modules sont réinitialisés après un silence de durée supérieure à SIL (13) en sorte que les candidats émetteurs d'ordre inférieur au dernier module ayant émis un message, peuvent émettre un message signifiant ou de candidature après les délais concernés (voir ci-dessous).

**SIL (12):**
délai dit par commodité "de contrôle". Les SATn,m qui n'ont été destinataires d'aucun message en provenance de leur COMm associé depuis un temps prédéterminé (en pratique quelques minutes) peuvent émettre un message dans la plage définie par ESIL (12).

**SIL (11):**
délai dit, par commodité, "deuxième délai intermédiaire". Ce délai indique que la séquence réservée au COMj et au SATi, j est terminée, qu'aucun COMk de numéro $k > j$ ne s'est manifesté et qu'il y a encore au moins un SATn,m tel que $m > j + 1$ candidat à l'émission. Les SAT dans cette situation tentent d'émettre un message de candidature SXM dans la plage définie par ESIL (11).

**SIL (10):**
SIL (10) est un délai de candidature d'ordre supérieur pour les communicateurs et est appelé, par commodité, "délai primaire de candidature d'ordre supérieur". SIL (10) indique que la séquence réservée au COMj et au SATi,j est terminée, qu'aucun COM $j + 1$ ou SATi,j $+ 1$ ne s'est manifesté et qu'il y a encore au moins un COMm de numéro $m > j + 1$ candidat à l'émission. Tous les COM dans cette situation tentent d'émettre un signal de candidature SXM dans la plage définie par ESIL (10).

**SIL (9):**
SIL (9) est un délai appelé, par commodité, "premier délai intermédiaire" et indique que la séquence réservée au COMj et au SATi,j est terminée, que le communicateur COM $j + 1$ ne s'est pas manifesté et qu'il y a encore au moins un SATn,j $+ 1$ candidat à l'émission. Tous les SATn,j $+ 1$ tentent d'émettre un message de candidature SXM dans la plage définie par ESIL (9).

**SIL (8):**
SIL (8) est un délai de message signifiant pour les communicateurs et est appelé, par commodité, "délai primaire de message signifiant". SIL (8) indique que la séquence réservée au COMj et au SATi,j est terminée. Un COMj $+ 1$ peut débuter un message dans la plage définie par ESIL (8).

**SIL (7):**
SIL (7) est un délai associé aux communicateurs et est dit, par commodité, "délai primaire de double numérotation". En cas de numérotation identique (cas anormal) de deux ou plusieurs COM, le risque de "collision" entre plusieurs messages signifiants émis par ces COM est limité, puisque le début de l'émission a lieu dans une plage de durées déterminées par la formule ESIL (N) comportant une valeur aléatoire ALEA telle qu'exposée plus haut. Le COM le plus "rapide" émet dans la plage définie par ESIL (8) et inhibe provisoirement les autres COM portant le même numéro. Ces derniers émettent alors dans la plage définie par ESIL (7).

SIL (6):

SIL (6) est un délai de candidature d'ordre supérieur associé aux satellites et est appelé, par commodité, "délai secondaire de candidat d'ordre supérieur". SIL (6) indique que dans la séquence réservée au COMj et au SATi,j, il y a encore un SATn,j tel que n > i + 1. Tous les SAT dans cette situation tentent d'émettre un message de candidature d'ordre supérieur SXM dans la plage définie par ESIL (6).

SIL (5):

SIL (5) est un délai de message signifiant associé au satellite et est appelé, par commodité, "délai secondaire de message signifiant". SIL (5) indique que dans la séquence réservée au COMj et au SATi,j, la période réservée au SATi,j est terminée. Un SATi + 1, j peut débuter un message dans la plage définie par ESIL (5).

SIL (4):

SIL (4) est un délai associé au satellite dit, par commodité, "délai secondaire de double numérotation". Au cas où par erreur, plusieurs SAT associés à un communicateur donné portent le même numéro, l'instant aléatoire de début d'émission permet d'éviter les collisions entre messages signifiants issus de ces SAT. Le plus "rapide" d'entre eux émet dans la plage définie par ESIL (5) et inhibe provisoirement les autres qui émettront dans la plage définie par ESIL (4).

SIL (3):

SIL (3) est un délai d'accusé de réception et donne la possibilité à tout COM ou tout SAT destinataire d'un message de données d'émettre dans la plage définie par ESIL (3), soit un message SOK, soit un message ROK.

En figure 17, on a illustré la structure d'un message de données émis par les modules. Un tel message, qui se trouve bien entendu entre deux zones de silence SIL comporte un début d'émission SYM, un indicateur de type de message IN, le numéro d'émetteur EM, le numéro de destinataire DN, suivi d'une série d'octets OCT, qui peut, dans certains modes de réalisation, être limitée à, par exemple, quatre, et une fin de message FNM. Le tableau II ci-dessous donne une correspondance entre les valeurs de l'indicateur de message IN et le type de message.

TABLEAU II

IN = 1  Message émis par SAT (EM, DN) à destination de COM (DN)

IN = 1  Message émis par COM (EM) à destination de SAT (DN, EM)

IN = 2  Message émis par COM (EM) à destination de COM (DN)

IN = 3  Message émis par SAT (EM, DN) n'ayant été destinataire d'aucun message depuis un temps prédéterminé, en pratique quelques minutes.

En fonctionnement normal, une fois tous les SAT associés initialisés, avec une numérotation de COM ou de SAT sans numérotation identique, les seules collisions possibles sont en ESIL (6—9—10 ou 11) sur le message SXM qui n'est qu'un indicateur non porteur de données significatives, et dont le parasitage éventuel ne perturbe pas le déroulement du séquencement.

Un réseau non initialisé, avec de nombreux COM ou SAT de numérotation multiple, et perturbé par des parasites, voit s'accroître le nombre de collisions possibles. Son fonctionnement est alors ralenti, mais la structure décrite ici assure le déroulement de chaque cycle sans favoriser les COM ou SAT de numéro faible par rapport aux COM ou SAT de numéro élevé.

Aucun blocage définitif n'est possible et si un émetteur est empêché d'émettre dans un cycle, il peut le faire dans les cycles suivants. Par ailleurs, un candidat émetteur peut toujours se recaler dans le cours des émissions d'un cycle, sans attendre le début du cycle suivant. Toute erreur de calage dans le cycle est récupérable à tout moment par contrôle des informations implicites et explicites du séquencement et du contenu des messages.

Par ailleurs, le contenu explicite et implicite des messages et du séquencement est porteur de toutes les informations nécessaires à une meilleure utilisation du réseau, qu'il s'agisse d'erreurs utilisateur ou de parasitage.

On notera aussi que la combinaison du procédé de modulation-démodulation avec celui de codage-décodage améliore encore plus les caractéristiques d'immunité aux perturbations du procédé de codage-décodage. On obtient ainsi un réseau de communication de données particulièrement insensible auxdites perturbations.

Dans les cas particulièrement difficiles, les terminaux de commande intelligents ou les sous-ensembles de traitement peuvent agir, grâce à une exploitation de ces informations, à un autre niveau de structure, sur la vitesse de transmission ou sur la longueur des messages et des zones de transmission pour optimiser la qualité et le rendement des transmissions.

Les quatre fonctions élémentaires de l'ensemble codage-décodage ligne CODL vont maintenant être décrites ci-après.

Décodage de données (DCOD)

La fonction DCOD a pour rôle, sur réception du signal MRE en provenance de IACL, d'exécuter les opérations suivantes:

décodage du signal de réception MRE en provenance de IACL et transmission vers TGMS (figure 12);

calcul de la vitesse de transmission du signal reçu;

contrôle de validité et discrimination de la vitesse de transmission;

détection du silence de la ligne.

Comme il a été vu précédemment, le signal de lecture MRE en provenance de IACL n'est significatif sur le plan temporel qu'au niveau du front arrière descendant, correspondant à l'instant d'extinction de la fréquence porteuse sur la ligne. Le codage des bits B0 et B1 étant réalisé par variation de la durée de telle sorte que B0 a une durée TSO (figure 13b) et B1 a une durée TS1 (figure 13c), la discrimination de B0 et B1 fait appel aux fonctions suivantes:

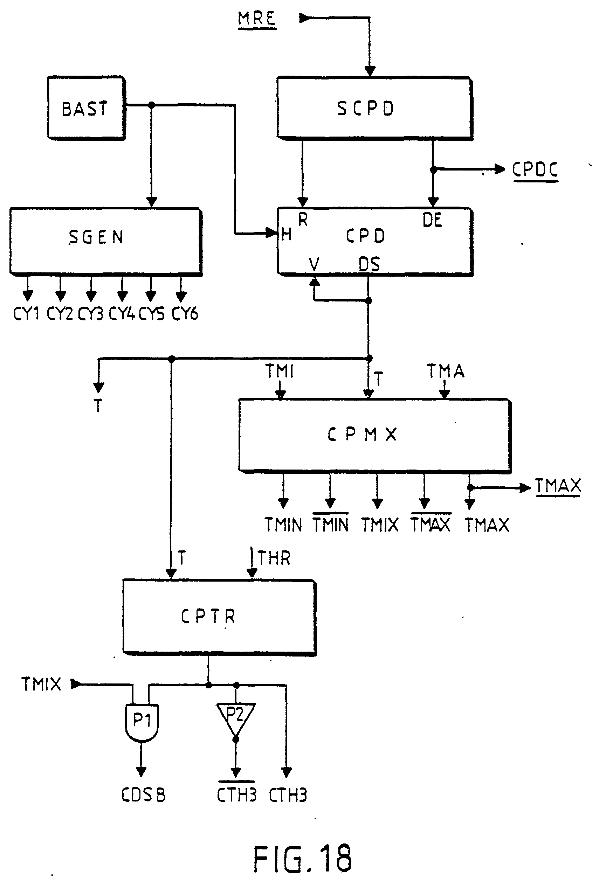

chronométrage du temps T (délai entre deux fronts descendants successifs de MRE) (figure 18);

contrôle de validité de T dans la gamme de vitesses fixée (figure 18);

contrôle de synchronisation en début de message SYN (figure 16) et en cours de message (figure 18);

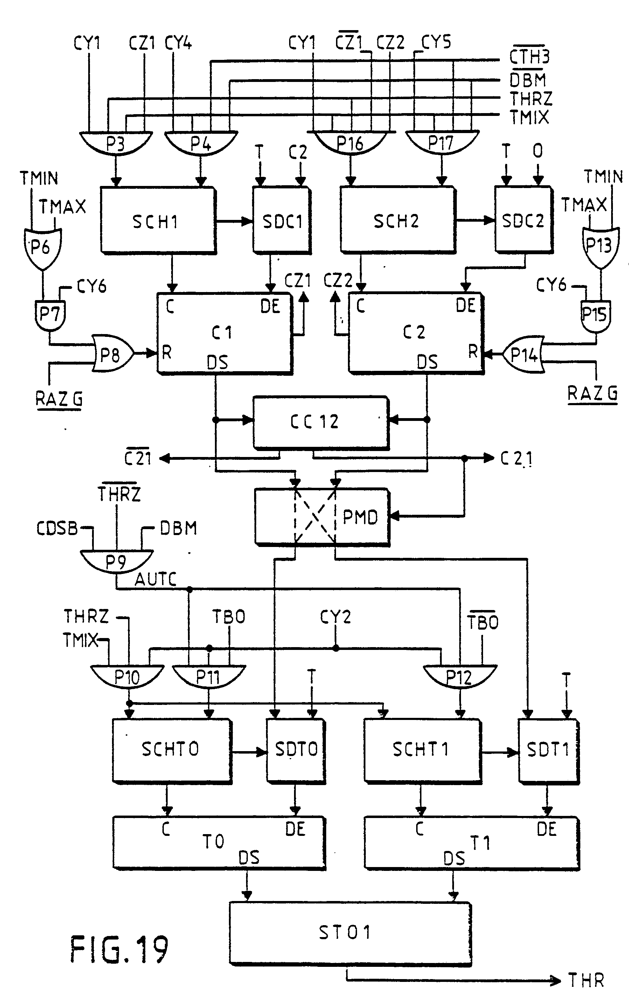

initialisation du calcul de THR (TH reçu, figure 13) en début de message (figure 19);

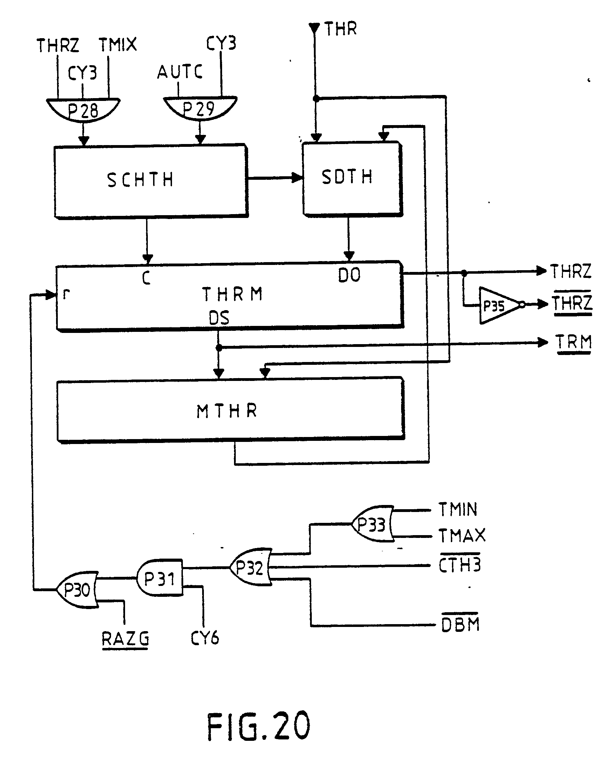

calcul de la moyenne évolutive de THR pendant la durée d'un message (figure 20) (TRM = valeur moyenne de THR);

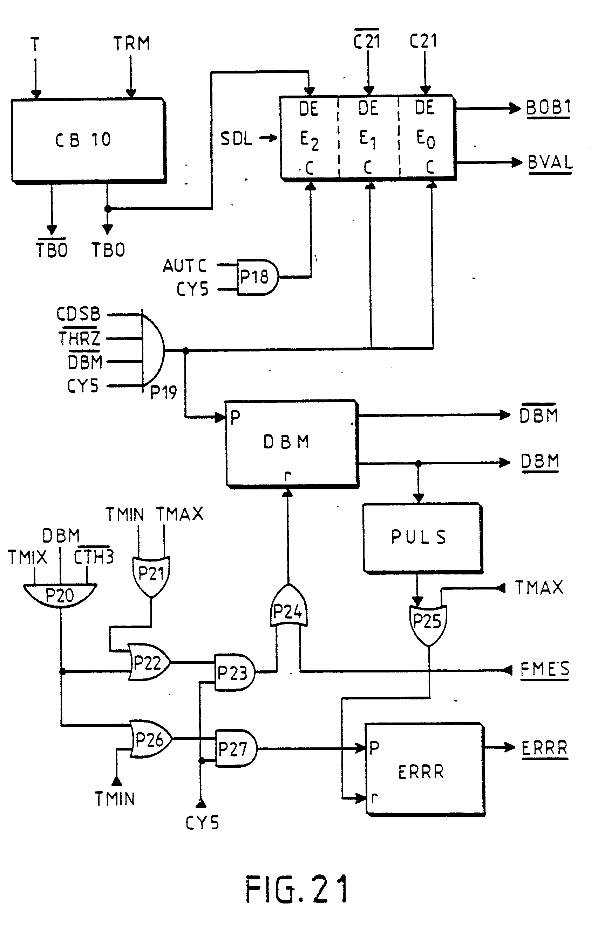

discrimination des B0 et des B1 et sortie des données vers TGMS (figure 21);

transmission des signaux de service et de contrôle vers TGMS.

Figure 18: CPD est constitué d'un compteur et d'un registre de stockage.

Le compteur est incrémenté par une horloge issue d'une base de temps BAST. A chaque front descendant de MRE, le synchronisateur SCPD fournit une commande (entrée DE de CPD) de transfert de données du compteur au registre suivi d'une commande (entrée R de CPD) de remise à zéro du compteur. La sortie de CPD constitue la valeur du temps T entre deux fronts descendants successifs de MRE. En cas de dépassement de capacité, CPD verrouille son incrémentation (entrée v de CPD). CPMX est un comparateur double qui vérifie que la durée T est comprise entre deux valeurs données TMI (durée minimale) et TMA (durée maximale) qui définissent la gamme de vitesses choisie.

Le signal TMIN est tel que T < TMI.

Le signal TMAX est tel que T > TMA.

Le signal TMIX est tel que TMI < T < TMA.

Le générateur de synchronisation SGEN fournit des horloges de synchronisation décalées dans le temps (CY1 à CY5), dans l'ordre de CY1 à CY5, à partir de la base de temps BAST. Ces horloges permettent de réaliser le séquencement général de DCOD.

CPTR est un comparateur de la valeur de T mesuré à deux bornes calculées TRM et 3 TRM (figure 20). Par construction, la durée TS1 d'un bit B1 est TS1 = 3/2 TH et la durée TSO d'un bit B0 est TSO = 5/2 TH (figure 13).

Le critère de validité de T par rapport au TRM mesuré depuis le début du message est obtenu par la comparaison de T à deux seuils S0 et S1.

$$S0 = TSI \frac{TSO-TS1}{2} = TRM;$$

$$S1 = TSO + \frac{TSO-TS1}{2} = TRM.$$

Si T est tel que $S_0 < T < S1$, la durée T présente bien un bit de données, sinon T est incohérent et ne répond pas à la norme du système. Le signal CTH3 fourni par le comparateur CPTR est tel que CTH3 = 1 pour $S_0 < T < S1$.

La porte P2 réalise le signal complémentaire $\overline{CTH3}$; la porte P1 réalise la combinaison logique CDSB; telle que CDSB = TMIX.CTH3. CDSB = 1, lorsque T se situe à l'intérieur des limites définies par le système.

Figure 20: le fonctionnement général de DCOD est séquencé par la présence ou non d'une valeur de TRM indiqué par le signal THRZ (TRM = 0).

A la mise sous tension, le signal d'initialisation générale RAZG remet à zéro la mémoire THRM. Dans le cours du fonctionnement, la mémoire THRM est aussi remise à zéro, si:

T est hors de la fourchette de temps TMI, TMA. La porte P33 réalise la fonction "OU" entre les signaux TMIN et TMAX.

T n'est pas dans la fourchette de temps TRM, 3TRM indiqué par le signal $\overline{CTH3}$.

Lorsque TGMS indique la fin de message (signal FMES figure 21) qui positionne à zéro la mémoire de début de message DBM (figure 21) à 0 ($\overline{DBM} = 1$). La porte P32 réalise le "ET" des trois conditions précitées et la porte P31 synchronise la remise à zéro au temps CY6.

Figure 19: le fonctionnement se déroule en deux phases:

THRZ actif: la porte P3 permet de charger la mémoire C1 si le contenu de C1 est nul (condition CZ1 = 1 fournie par C1) avec la condition TMIX au temps CY1. Le synchronisateur de chargement SCH1 fournit à la mémoire C1 (entrée c) une impulsion de chargement et oriente le sélecteur de données SDCI pour fournir la valeur de T à C1. Lorsque $\overline{CZ1} = O$ (C1 chargé), la nouvelle valeur de T se charge dans C2 suivant le même processus via la porte p16 et le sélecteur de données SDC2. Un comparateur CC12 compare les deux valeurs successives T1 et T2 contenues dans C1 et C2. Le résultat de la comparaison C21 détermine lequel des deux temps appartient à B0 ou à B1 puisque T de B0 > T de B1. Le signal C21 commande un permutateur de données PMD qui dirige les valeurs de $T_1$ et $T_2$ vers les mémoires T0 et T1 de telle sorte que le contenu de T0 correspond à B0 et celui de T1 à B1.

La porte P10 réalise la condition de chargement de T0 et T1 avec la condition TMIX au temps CY2. Les synchronisations de chargement de T0 (SCHTO) et T1 (SCHT1) fournissent

une impulsion de chargement à T0 et T1 et orientent les sélecteurs de données SDTO et SDT1 pour fournir les valeurs $T_1$ et $T_2$ à T0 et T1.

Un soustracteur STO1 des valeurs contenues dans T0 et T1 fournit la valeur de TRM qui est dirigée vers la mémoire THRM (figure 20).

La porte P18 autorise le chargement de TRM si TMIX = 1 pendant la première phase ou THRZ = 1 au temps CY3. Le synchronisateur de chargement SCHTH envoie une impulsion de chargement à la mémoire THRM et oriente le sélecteur de données SDTH pour fournir à THRM la valeur de TRM issue de ST01. La nouvelle valeur $T_3$ de T est alors comparée à TRM par CPTR (figure 18). Deux cas sont possibles.

CTH3 = O signifie que T ne répond pas aux critères de durées. Comme il a été vu précédemment, $\overline{CTH3}$ remet à zéro le contenu de THRM. Dans ce cas, la séquence de chargement de C1 et C2 reprend (figure 19). La mémoire de début de message n'étant pas positionnée ($\overline{DBM}$ = 1) et CTH3 étant égal à 1, la porte P4 commande le chargement de C1 au temps CY4 par la dernière bonne valeur de T contenue dans C2, le synchronisateur de chargement SCH1 orientant le sélecteur de données SDC1 pour charger les données de C2, la porte P17 réalise au temps CY5 le chargement de la valeur 0 dans C2 dans les mêmes conditions que P4. La séquence se poursuit par un nouveau calcul de THR, comme il a été vu précédemment.

CTR3 = 1 signifie que T répond aux critères de durées. La valeur TRM reste stockée dans THRM et THRZ = 1 (donnée non nulle dans THRM).

Figure 21: la porte P19 réalise en temps CY5 la condition "ET" entre CDSB (figure 19), $\overline{THRZ}$ (figure 20), qui vient de passer à 1, et DBM qui est à 1, puisque la mémoire DBM est à O. P19 positionne la mémoire de début de message DBM à 1. Par ailleurs, P19 commande le chargement des deux premiers étages $E_o$ et $E_1$ d'un registre SDL avec la valeur de B0 et B1 qui a été déterminée par le comparateur CC12 (signal C21 et $\overline{C21}$) (figure 19). La phase 1 est terminée et la phase 2 commence:

$\overline{THRZ}$ actif: les nouvelles valeurs de T qui vont se succéder, sont comparées à la valeur 2 TRM par le comparateur CB10. En effet, lorsque T < 2TRM il s'agit du bit B1, et lorsque T > 2TRM, il s'agit du bit B0. La valeur du bit B0 ou B1 (signal TB0) est chargée dans le troisième étage $E_2$ du registre SDL par un ordre de chargement issu de la porte P18. Cette porte reçoit le signal AUTC de la porte P9 (figure 19) tel que AUTC = (CDSB. $\overline{THRZ}$. DBM). AUTC signifie que T répond aux fourchettes de temps, que la mémoire THRM contient une valeur TRM, que la mémoire de début de message a basculé. P18 synchronise le chargement de SDL sur le temps CY5.

Figure 19: les valeurs successives de T vont se charger dans les mémoires; T0 si TB0 = 1 et T1 si TB0 = 0 par la commande de chargement issue des portes P11 et P12, à la condition AUTC = 1 et au temps CY2. Les sélecteurs de données SDT0 et SDT1 sont orientés pour fournir la donnée T aux mémoires T0 et T1. Ainsi une nouvelle valeur de THR est obtenue.

Figure 20: chaque valeur de THR stockée dans THRM est transférée dans un circuit MTHR qui lui soustrait la nouvelle valeur de THR calculée pour STO1. Le résultat de la soustraction pondérée d'un coefficient K est additionné à la valeur THR pour donner un THR moyen évolutif qui vient charger la mémoire THRM. La porte P29 réalise la synchronisation de ce chargement sur CY3 avec la condition AUTC = 1. Le sélecteur de chargement SDTH est orienté de façon à diriger les données de MTHR vers THRM. TRM représente la valeur moyenne de THR.

Figure 21: le registre SDL indique à TGMS qu'il a des données prêtes BO, B1 par le signal BVAL.

A chaque transition de BVAL, SDL décale ses informations de l'étage $E_2$ à $E_o$ pour fournir les valeurs successives de B0 et B1 à TGMS.

La mémoire de début de message est remise à zéro par la porte P24 soit en fin de message FMES provenant de TGMS soit au temps CY5 (porte P23) si la porte P21 ou P20 l'autorise (via la porte P22).

P21 vérifie les conditions de durées de T (TMIN et TMAX) et P20 les conditions de durée de T par $\overline{CTH3}$ (TRM < T < 3TRM). Si P20 = 1 ou TMIN = 1 la porte P26 positionne la mémoire d'erreur de réception ERRR au temps CY5 (porte P27). Cette mémoire est remise à zéro à la montée du signal DBM par le générateur d'impulsion PULS ou lorsque TMAX = 1 indiquant que le message est terminé.

Calcul du temps (CALT)

Chaque émetteur récepteur COM ou SAT dispose d'une base de temps propre qui définit la durée des bits B0 B1 en émission ainsi que la durée des silences. Dans la présente invention, une des caractéristiques des bases de temps est d'être réalisée à partir de moyens économiques qui font que la valeur de la fréquence "f" de ladite base de temps n'est calée qu'avec une faible précision par rapport à la fréquence nominale "fo" (dans une application de la présente invention, cette précision est de ±10%, soit ±20% maximum entre les fréquences "f" de deux émetteurs récepteurs calés aux valeurs extrêmes).

Etant donné que la valeur des silences est déterminée par chaque émetteur récepteur COM ou SAT à partir de sa propre base de temps et que la durée des silences intervient, dans le principe même du système, pour définir le séquencement général, la fonction CALT est réalisée de façon à corriger sa valeur de base de temps en fonction des mesures de TRM qui sont faites par DCOD pendant les cycles de lecture.

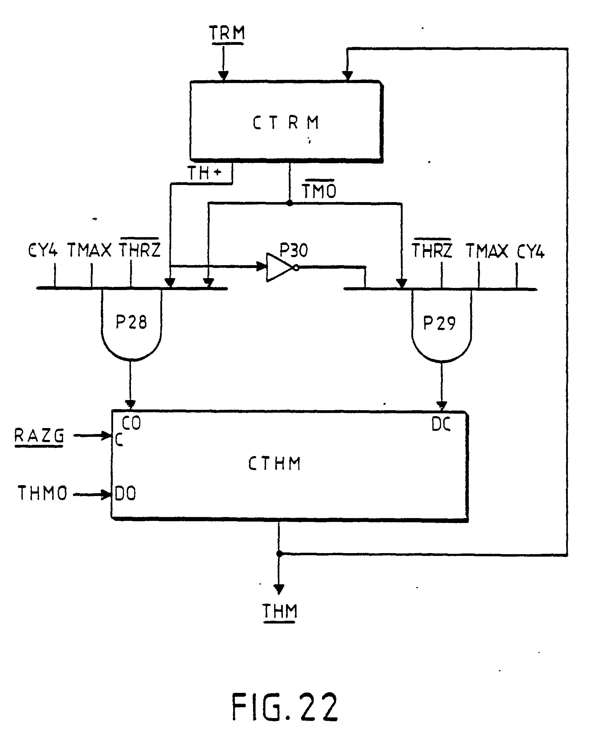

La figure 22 montre l'organisation de CALT: un compteur CTHM est initialisé à la mise sous tension par le signal de remise à zéro générale RAZG qui provoque le chargement dans CTHM d'une valeur THMO qui correspond à une valeur moyenne nominale de la valeur du temps TH. La sortie de ce compteur est donc THM, valeur moyenne de TH qui servira de base de temps pour l'émission et le comptage des silences. Un comparateur CTRM réalise la comparaison de durée entre la valeur TRM, mesurée et moyennée par DCOD pendant les cycles de réception et la valeur THM venant de CTHM. CTRM commande les portes P28 et P29 par deux signaux: TH + qui signifie lorsqu'il est égal à 1 que TRM< THM et son complément $\overline{TH+}$ (P30), et $\overline{TMO}$ qui signifie que TRM et THM sont différents. Les portes P28 et P29 sont validées lorsque $\overline{THRZ}$ = 1 (TRM non nul) et TMAX = 1 (début du silence après lecture) et $\overline{TMO}$ = 1 (TRM = THM) au temps CY4. Lorsque TRM < THM la porte P28 est validée par TH+ et la porte P29 bloquée par $\overline{TH+}$. P28 fournit à CTHM une impulsion sur son entrée comptage (CO) qui incrémente la valeur THM d'une unité. Lorsque TRM < THM, la porte P29 décrémente THM d'une unité par l'entrée DC de CTHM. A chaque lecture de messages en provenance d'autres émetteurs récepteurs, le COM ou SAT considéré corrige sa valeur de THM en la faisant tendre vers une moyenne des TRM reçus. Lorsqu'il émettra à son tour, ce sera avec une valeur THM corrigée de telle sorte que les THM de chaque émetteur récepteur vont tendre vers une valeur unique commune.

Codage des Données (CODD)

CODD a pour fonctions de coder les messages de TGMS sous forme de B0 B1 et de les transmettre à IACL pour émettre les messages codés sur la ligne. TGMS donne un ordre d'émission EEMS à CODD au bout d'un nombre entier de silences dont la durée élémentaire est TSO (TSO = 5/2 THM). Dans une application de la présente invention, le début d'émission effectif intervient dans une plage de largeur TS0/2 située entre 1/4 TSO et 3/4 TSO après un premier silence de durée TSO. L'instant de début dans la plage est défini par une valeur aléatoire du temps ALEA telle que 0 < ALEA < 1/2 TSO. D'autre part, l'émission est précédée d'un signal ITP de durée THM. L'instant exact de début d'émission TDE est donc donné par la relation.

$$TDE = TSO + 1/4\ TSO + ALEA - THM.$$

Comme TSO = 5/2 THM par construction la valeur de TDE est telle que:

$$TDE = (2 + 1/8)\ THM + ALEA$$
$$0 < ALEA < 5/4\ THM.$$

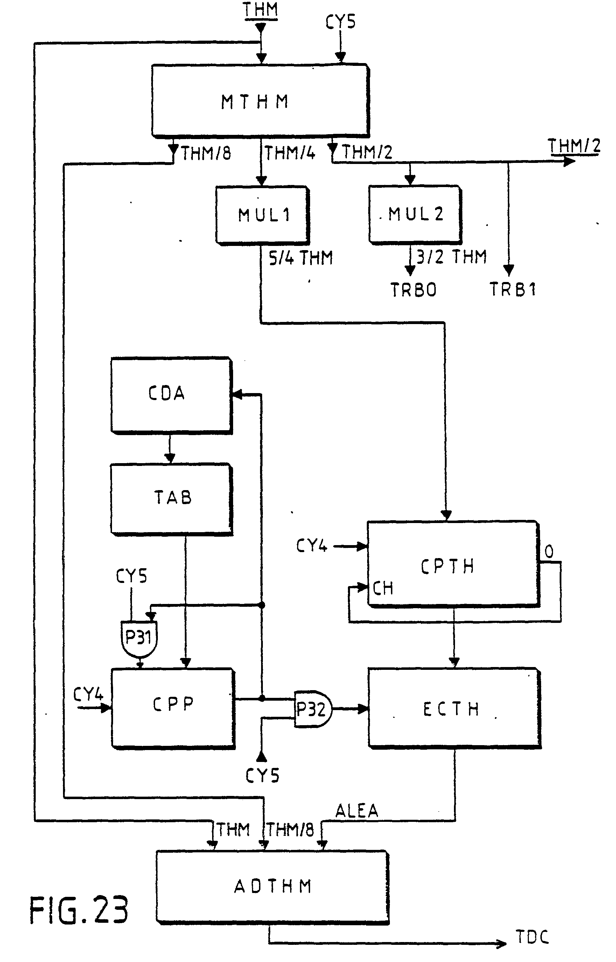

La figure 23 montre comment sont réalisées toutes les valeurs de temps élémentaires nécessaires à CODD, à partir de la valeur de THM fournie par CALT. La valeur de THM est stockée dans une mémoire MTHM au cycle d'horloge CY5. La donnée THM est stockée sous forme "binaire pure" en sortie de MTHM de sorte que par simple décalage des poids des bits, MTHM fournit 1/2 THM, 1/4 THM, 1/8 THM.

Le multiplieur MUL1 réalise la multiplication par 5 de 1/4 THM pour fournir la valeur maximale de ALEA. Le multiplieur MUL2 réalise la multiplication par 3 de 1/2 THM pour fournir la valeur du temps TRBO correspondant à la phase de repos du signal B0 (figure 13b), tandis que la phase de repos de B1 (figure 13c) est obtenue directement par 1/2 THM (TRB1). Le calcul de ALEA est réalisé par un compteur CPTH qui se décrémente avec une horloge CY4 et se recharge à la valeur 5/4 THM lorsqu'il arrive à zéro. Un second compteur CPP est chargé par une série de nombres pseudo-aléatoires contenue dans une table TAB. CPP se décrémente sur l'horloge CY4. Lorsqu'il arrive à zéro, il fournit à la mémoire d'échantillonnage ECTH une impulsion de chargement, il fournit au compteur CDA une impulsion d'incrémentation de telle sorte que CDA fournit une nouvelle adresse à la table TAB. La table TAB donne un nouveau nombre aléatoire qui est chargé au cycle d'horloge CY5 dans CPP via la porte P31, et le cycle de CPP recommence, de telle sorte que la fréquence du signal de sortie de CPP est pseudo-aléatoire. La mémoire ECTH échantillonne donc au cycle CY5 par la porte P32, des valeurs pseudo-aléatoires du contenu de CPTH dans une gamme de valeurs allant de O à 5/4 THM correspondant au signal ALEA. Un additionneur ADTHM réalise le calcul du temps TDC de début de cycle émission de CODD, tel que:

$$TDC = THM + 1/8\ THM + ALEA.$$

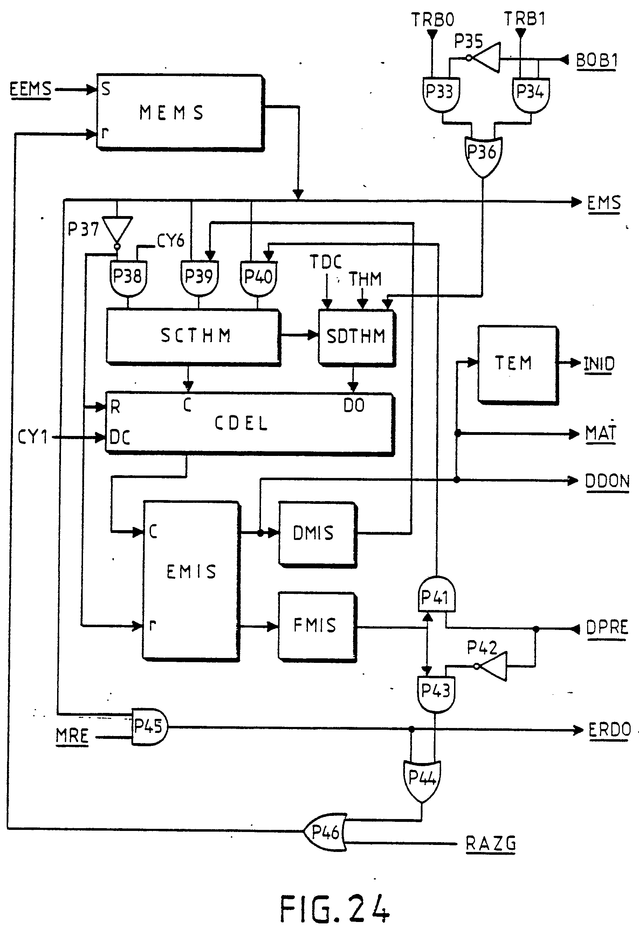

La figure 24 montre le système de formatage de B0 B1 de CODD.

Le cycle d'émission est contrôlé par la mémoire d'émission MEMS. Quand MEMS est en repos, son signal de sortie EMS est à 0 et $\overline{EMS}$ à 1 (porte P37). La porte P38 est validée à chaque cycle d'horloge CY6 et fournit au sélecteur de chargement SCTHM une impulsion qui est transmise à l'entrée de chargement du compteur de délai CDEL. D'autre part, SCTHM commande le sélecteur de données SDTHM pour présenter au compteur CDEL la donnée TDC calculée précédemment. Lorsque TGMS fournit à MEMS le signal de début d'émission EEMS, le signal EMS passe à 1. Le compteur CDEL est déverrouillé par $\overline{EMS}$ (entrée R de CDEL) et CDEL est décrémenté par l'horloge CY1.

Lorsque le délai TDC est terminé, CDEL fournit à la mémoire d'émission EMIS une impulsion qui la fait passer à 1. DMIS envoie une impulsion de chargement sur le front montant du signal de EMIS qui active la porte P39, de sorte que, par un processus équivalent au chargement de TDC, CDEL va stocker la valeur THM. CDEL décompte le temps THM et fait basculer à nouveau EMIS qui passe à zéro. Sur le front descendant du signal de EMIS, EMIS fournit une impulsion de chargement à la porte P41. Cette impulsion est transmise à la porte P40 si TGMS donne le signal données prêtes (DPRE). La porte P40 provoque alors le chargement dans CDEL de la durée TRBO (bit B0) ou TR B1 (bit B1) suivant la valeur du bit B0 B1 à émettre, laquelle est fournie par TGMS (porte P33 à P36). Le signal de sortie de EMIS est envoyé; vers IACL (signal MAT) pour moduler la porteuse;

vers IACL (signal INID) à travers une temporisation TEM pour bloquer le démodulateur de IACL pendant la phase émission; vers TGMS pour formuler une demande de données (DDON). TGMS fournit alors une nouvelle donnée B0 B1. En fin de message, TGMS ne fournit plus le signal DPRE. La porte P43 est validée par $\overline{DPRE}$ au moment où FMIS demande le chargement de données. P43 remet à zéro la mémoire MEMS par les portes P44 et P46. En cours d'émission la porte P45 est validée par EMS. Si un signal de réception MRE venant de IACL est détecté, P45 fournit un signal d'erreur de données ERDO à TGMS (cas de collision avec un autre émetteur ou réception de parasites). ERDO remet à zéro la mémoire MEMS par les portes P44 et P46. A la mise sous tension, le signal RAZG initialise à zéro la mémoire MEMS.

Comptage des Silences (CSIL)

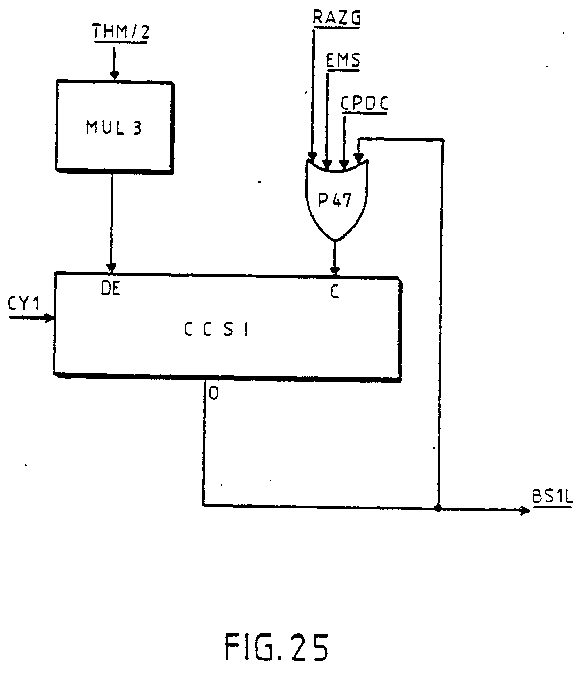

CSIL (figure 25) est chargé d'indiquer à TGMS les changements de zone de silence. Un compteur CCSI est chargé par la valeur du silence 5/2 THM calculée par le multiplieur MUL3 à partir de 1/2 THM. CCSI se décrémente par une horloge CY1. Lorsque le temps correspondant à 5/2 THM est écoulé, CCSI envoie une impulsion BSIL à TGMS indiquant le changement de zone de silence et se recharge par la porte P47, pour recommencer son cycle, CCSI est rechargé à la fin d'un message en réception par le signal CPDC fourni par DCOD. Il est chargé pendant le signal EMS de CODD pour que le décomptage des silences commence dès la fin d'émission d'un message.

Enfin, CCSI est chargé à la mise sous tension par RAZG.

Il va de soi que de nombreuses modifications peuvent être apportées au réseau qui vient d'être décrit notamment à la structure des modules, sans sortir du cadre de la présente invention.

En effet, à l'appui des figures 12 à 25, il vient d'être décrit un mode de réalisation d'un codeur-décodeur ligne pour module selon la présente invention, réalisé en logique câblée. Il va de soi qu'un tel module peut être réalisé en logique programmée.

A cet effet, il convient de rappeler que les figures 12 à 25 représentent un ensemble d'organes élémentaires réalisant des sous-fonctions élémentaires permettant la réalisation des quatre fonctions de l'organe codage-décodage ligne CODL, à savoir les fonctions décodage de données DCOD, calcul du temps CALT, codage des données CODD et comptage des silences CSIL. L'homme de l'art dispose donc de tous les éléments nécessaires pour réaliser un programme piloté, par exemple, par un microprocesseur, et reprenant les fonctions élémentaires décrites à l'appui des figures 12 à 25. Le programme peut être enregistré dans une mémoire dite PROM (mémoire programmable à lecture seule) ou dans une mémoire dite REPROM (mémoire reprogrammable à lecture seule). Une pluralité de signaux numériques de base, correspondant aux consignes générales sont bien entendu enregistrées dans ces mémoires. Une mémoire vive est ahassociée également au microprocesseur et on peut y inscrire, de manière bien connue de l'homme de l'art, les consignes variables, en l'espèce, les numéros d'ordre des modules SAT ou COM.

On observera aussi que tout ce qui a trait au protocole d'échange d'informations entre les modules (par exemple les signaux SXM, SOK, ROK, etc...) ont été exposés en termes généraux suffisants pour qu'un homme du métier puisse réaliser ce programme de façon convenable pour assurer une mise en oeuvre des modules du réseau de façon conforme au procédé selon la présente invention.

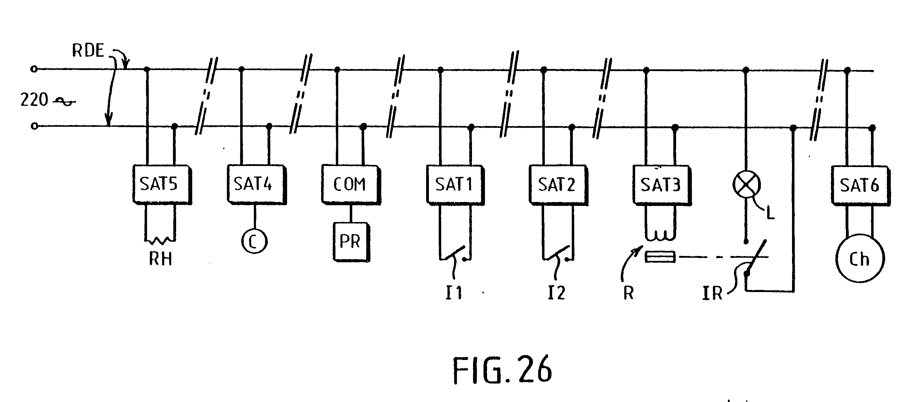

On va maintenant décrire, à l'appui de la figure 26, une application d'un réseau selon la présente invention à la distribution d'énergie électrique dans une habitation.

On sait que, d'habitude, la distribution d'énergie électrique, en pratique le courant alternatif 110—220 volts, 50—60 Hz, est assurée par un ensemble de conducteurs aboutissant aux prises de courant, aux interrupteurs, aux télérupteurs ou autres organes de commande. En pratique, de nombreux conducteurs sont souvent nécessaires pour commander, par exemple, une seule lampe. En effet, il est connu que lorsqu'il s'agit de commander une même lampe à partir de deux interrupteurs, on organise ce qu'il est convenu d'appeler un "va-et-vient" entre deux interrupteurs.

On sait aussi que lorsqu'il s'agit de commander un organe électrique à partir de plusieurs interrupteurs, on fait souvent appel à ce que l'on appelle des "télérupteurs" qui sont en pratique des interrupteurs commandant à distance un relais, lequel actionne l'organe électrique considéré.

On sait que tout cela conduit à l'installation d'un abondant réseau de conducteurs électriques dans une habitation.

Selon un aspect de la présente invention, le réseau de distribution d'énergie électrique à l'intérieur d'une habitation est constitué par une ligne de distribution d'énergie desservant les divers organes de commande et les divers organes électriques commandés, par exemple des lampes. On raccorde ce réseau à un processeur central PR (figure 26) par l'intermédiaire d'un communicateur COM. On associe un module satellite SAT à chacun des organes de commande et à chacun des organes électriques commandés.

La figure 26 illustre, de façon très schématique, cet aspect de la présente invention. Une lampe L doit être commandée, soit par interrupteur I1, soit par un interrupteur I2. On associe un satellite SAT1, SAT2 à chacun des interrupteurs I1, I2 et un satellite SAT3 à la lampe L. Le satellite SAT3 est raccordé à un actionneur, en pratique un relais R qui commande un interrupteur IR commandant l'allumage de la lampe L. Les interrupteurs I1 et I2 commandent les satellites SAT1 et SAT2.

La commande de la lampe L se fait par l'intermédiaire du réseau de communication de données constitué par le réseau de distribution d'énergie électrique. RDE, le communicateur COM, associé au processeur PR, les satellites SAT.

L'utilisateur, lorsqu'il veut allumer la lampe L actionne les interrupteurs I1 ou I2; cette information est prise en compte par les satellites et le réseau de communication de la manière exposée plus haut, et l'allumage de la lampe L est en fait commandé par le processeur PR par l'intermédiaire du réseau de communication de données.

Il apparaît alors que dans une habitation comportant de nombreuses lampes et autres appareils électroménagers, il est possible de commander ces appareils par l'intermédiaire d'un processeur central à partir d'actionneurs disposés en n'importe quel endroit de l'habitation, cela sans faire appel à des systèmes de va-et-vient, de télérupteurs ou de rhéostats utilisés jusqu'à présent dans le domaine de la distribution d'énergie électrique domestique. En fait, le schéma de distribution d'énergie électrique est programmé et peut, par conséquent, être modifié dans le processeur, ce qui donne à une installation de distribution d'énergie électrique conforme à cet aspect de l'invention, une souplesse d'emploi sans précédent par rapport aux techniques habituelles.

De plus, ce processeur peut également, grâce au réseau de communication des données selon l'invention, commander ou contrôler d'autres fonctions telles que régulation de chauffage, surveillances, alarmes, sonneries de portes, qui sont réalisées d'habitude à l'aide de thermostats et horloges programmables, détecteurs de fumées, détecteurs de présence, sonnette, etc... chacun de ces équipements demandant, à l'heure actuelle, l'installation de liaisons spécifiques de conducteurs électriques spécialisés.

Le processeur peut aussi commander d'autres fonctions encore peu répandues comme par exemple l'allumage d'une lampe au crépuscule, puis son extinction à une heure fixée d'avance, l'ouverture de portes d'entrée ou de garage par clef électronique ou code numérique, ces fonctions demandant, elles aussi, à l'heure actuelle, des liaisons par conducteurs spécifiques.

Grâce à l'invention, les moyens exécutant ces fonctions peuvent être raccordés directement ou indirectement au réseau de distribution d'énergie avec un module SAT associé à chacun d'eux, toutes les liaisons spécifiques étant abolies.

A titre d'exemple, en figure 26, un satellite SAT4 est raccordé à un capteur de température C, un satellite SAT5 à un rhéostat RH et un satellite SAT6 à une commande de chauffage CH.

L'utilisateur peut régler une température optimale à l'aide du rhéostat RH et le processeur PR déclenche le chauffage CH lorsque la température indiquée par le capteur de température C devient inférieure à la consigne affichée par le rhéostat RH.

## Revendications

1. Procédé de transmission de données numériques dans un réseau du genre comportant au moins deux modules ($M_0$—$M_5$, $M_n$) adressables reliés par au moins une ligne de transmission banalisée (L), procédé du genre dans lequel on divise le temps pour définir des laps de temps d'émission et dans lequel chaque module ($M_1$—$M_5$) contrôle l'absence de signal (MRE) sur la ligne avant d'émettre et n'émet que dans ce dernier cas, caractérisé en ce qu'on affecte à chaque module (COM) au moins un numéro d'ordre; on lui associe au moins un compteur dont le contenu est représentatif du numéro du module autorisé a émettre un message dit par commodite "signifiant"; on définit au moins trois intervalles de temps de silence entre messages, ou délais, de durées croissantes, respectivement, appelés par commodité: "délai de message signifiant", "délai de candidature d'ordre supérieur" et "délai de candidature d'ordre inférieur" et caractérisé en ce que, en appelant par commodité "candidats émetteurs", les modules m ayant un message signifiant à transmettre et "message de candidature" (SXM), un message émis par un candidat émetteur dont l'ordre ne suit pas immédiatement celui du module qui vient d'émettre, on utilise lesdits délais de durées croissantes pour séquencer les émissions éventuelles des modules comme suit:

on laisse émettre le candidat émetteur autorisé à émettre au bout d'un délai correspondant audit délai de message signifiant, après le dernier signal présent sur la ligne;

on laisse émettre un message de candidature (SXM) aux candidats émetteurs d'ordre supérieur à celui qui vient d'émettre au bout d'un délai correspondant audit délai de candidature d'ordre supérieur après le dernier signal présent sur la ligne;

on incremente le compteur de chaque module apres chaque message signifiant et chaque message de candidature émis après un délai de candidature d'ordre supérieur;

on laisse émettre un message de candidature (SXM) aux candidats émetteurs d'ordre inférieur a celui qui vient d'émettre après un délai de candidature d'ordre inférieur après le dernier signal présent sur la ligne; et

on réinitialise le compteur de chaque module après un message de candidature émis après un délai de candidature d'ordre inférieur, en sorte que le premier module dans l'ordre est autorisé à émettre un message signifiant.

2. Procédé selon la revendication 1, caractérisé en ce qu'on définit un quatrième délai de durée plus courte que celle du délai de message signifiant, appelé, par commodité, "délai d'accusé de réception" et en ce qu'on laisse émettre par le module (COM) destinataire du dernier message signifiant, un message dit "d'accusé de réception" (SOK, ROK) au bout d'un délai correspondant audit délai d'accusé de réception.

3. Procédé selon l'une quelconque des revendications 1, 2, caractérisé en ce qu'on dispose dans le réseau des modules dits "communicateurs" (COM) et des modules dits "satellites" (SAT), chaque satellite étant associé à un communicateur par un deuxième numéro d'ordre:

on séquence les émissions des satellites associés à un communicateur donné au moyen de délai, appelés "secondaires", de message signifiant et de candidat d'ordre supérieur;

on séquence les émissions des communicateurs (COM) au moyen de délais appelés primaires, de message signifiant et de candidat d'ordre supérieur, le délai de candidat d'ordre inférieur étant communiqué aux satellites et communicateurs, les délais primaires étant de durée plus longue que celle des délais secondaires.

4. Procédé selon la revendication 3, caractérisé en ce que:

on définit un premier délai intermédiaire de durée comprise entre celle des délais primaires en sorte qu'on permet aux satellites candidats émetteurs associés au communicateur (COM) autorisé à éméttre, d'émettre un message de candidature d'ordre supérieur (SXM);

on définit un deuxième délai intermédiaire de durée comprise entre celle du délai primaire de candidat d'ordre supérieur et celle du délai de fin de cycle, en sorte qu'on permet aux satellites (SAT) candidats émetteurs associés à un communicateur (COM) d'ordre supérieur à celui autorisé à émettre, d'émettre un message de candidature d'ordre supérieur (SXM).

5. Procédé selon la revendication 4, caractérisé en ce qu'on définit un délai dit par commodité "de contrôle" de durée comprise entre celle du deuxième délai intermédiaire et celle du délai de fin de cycle et on laisse émettre les satellites (SATn,m) n'ayant été destinataires d'aucun message en provenance de leur communicateur associé (COMm) depuis un temps prédéterminé.

6. Procédé selon l'une quelconque des revendications 1 à 5, caractérisé en ce qu'on laisse émettre les modules dans une plage du durée déterminée en additionnant à celle du délai concerné précédant le message, une valeur aléatoire (ALEA) comprise entre des limites prédéterminées.

7. Procédé selon la revendication 6, caractérisé en ce qu'on définit un délai secondaire dit, par commodité, "de double numérotation" d'une durée comprise entre celle du délai d'accusé de réception et cella du délai secondaire de message signifiant et au cas où, par erreur, plusieurs satellites (SAT) associés à un même communicateur (COM) portent le même numéro, un premier d'entre eux émet après un délai de message signifiant, tandis que le ou les autres émettent après ledit délai secondaire de double numérotation; et en ce qu'on définit un délai primaire dit, par commodité, "de double numérotation" de durée comprise entre celle du délai secondaire de candidat d'ordre supérieur et celle du délai primaire de message signifiant et, au cas où par erreur, plusieurs communicateurs (COM) portent le même numéro d'ordre, un premier de ceux-ci émet après un délai primaire de message signifiant, tandis que le ou les autres émettent après ledit délai primaire de double numérotation.

8. Procédé selon l'une quelconque des revendications 1 à 7, caractérisé en ce que lesdits délais sont constitués par la juxtaposition d'un nombre prédéterminé de délais de durées élémentaires.

9. Procédé selon l'une quelconque des revendications 1 à 8, caractérisé en ce que les messages sont, au moins en partie, composés d'impulsions dites actives (SA) modulant une onde porteuse à fréquence unique ($F_o$) pour tous les modules formant ainsi des signaux dits actifs, et en ce qu'en combinaisons:

on élimine les signaux ($P_t$) de durée inférieure à une durée prédéterminée (T) survenant pendant chaque intervalle de temps ($t_2$) entre signaux actifs (SA):

on choisit une durée (t) de signal actif (SA) sensiblement supérieure à celle de ladite durée prédéterminée (T);

on code les états logiques par variation de l'intervalle de temps ($t_2$) entre signaux actifs (SA).

10. procédé selon la revendication 9, caractérisé en ce que, pour déterminer le temps écoulé entre signaux actifs (SA) consécutifs, on mesure le temps écoulé entre les fronts arrière de signaux démodulés (MRE).

11. Procédé selon l'une quelconque des revendications 1 à 10, caractérisé en ce que lesdits modules adressables ($M_o$—$M_5$, $M_n$) comportant chacun un modulateur (MDUL), les messages sont, au moins en partie, composés d'impulsions dites actives (SA) modulant une onde porteuse à fréquence unique ($F_o$) pour tous les modules formant ainsi des signaux dits actifs, et en ce que:

on s'arrange pour que l'impédance mesurée depuis la ligne ($L_t$) de l'interface (IACL) modulateur (MDUL)-ligne (L) soit résistive à la fréquence ($F_o$) de l'onde porteuse; pour qu'elle soit faible pendant l'émission de signaux actifs (SA) et élevée en dehors de l'émission.

12. Réseau de transmission de données numériques du genre comportant au moins deux modules ($M_o$-$M_5$, $M_n$) adressables reliés par au moins une ligne de transmission banalisée (L) mettant en oeuvre un procédé du genre dans lequel on divise le temps pour définir des laps de temps d'émission et dans lequel chaque module ($M_1$—$M_5$) contrôle l'absence de signal (MRE) sur la ligne avant d'émettre et n'émet que dans ce dernier cas, réseau caractérisé en ce qu'il est affecté à chaque module (COM) au moins un numéro d'ordre; il lui est associé au moins un compteur dont le contenu est représentatif du numéro du module autorisé à émettre un message dit par commodité "signifiant"; et en ce que, dans ledit procédé on définit au moins trois intervalles de temps de silence entre messages, ou délais, de durées croissantes, respectivement appelés par commodité: "délai de message signifiant", "délai de candidature d'ordre supérieur" et "délai de candidature d'ordre inférieur" et, en appelant par commodité "candidats émetteurs", les modules m ayant un message signifiant à transmettre et "message de candidature" (SXM), un message émis par un candidat émetteur dont l'ordre ne suit pas immédiatement celui du module qui vient d'émettre, on utilise lesdits délais de durées croissantes pour séquencer les émissions éventuelles des modules comme suit:

on laisse émettre le candidat émetteur autorisé à émettre au bout d'un délai correspondant audit délai de message signifiant, après le dernier signal présent sur la ligne;

on laisse émettre un message de candidature (SXM) aux candidats émetteurs d'ordre supérieur à celui qui vient d'émettre au bout d'un délai correspondant audit délai de candidature d'ordre supérieur après le dernier signal présent sur la ligne;

on incrémente le compteur de chaque module après chaque message signifiant et chaque message de candidature émis après un délai de candidature d'ordre supérieur;

on laisse émettre un message de candidature (SXM) aux candidats émetteurs d'ordre inférieur à celui qui vient d'émettre après un délai de candidature d'ordre inférieur après le dernier signal présent sur la ligne; et

on réinitialise le compteur de chaque module après un message de candidature émis après un délai de candidature d'ordre inférieur, en sorte que le premier module dans l'ordre est autorisé à émettre un message signifiant.

13. Réseau selon la revendication 12, caractérisé en ce que, dans le procédé on définit un quatrième délai de durée plus courte que celle du délai de message signifiant, appelé, par commodité, "délai d'accusé de réception" et en ce qu'on laisse émettre par le module (COM) destinataire du dernier message signifiant, un message dit "d'accusé de réception" (SOK, ROK) au bout d'un délai correspondant audit délai d'accusé de réception.

14. Réseau selon l'une quelconque des revendications 12, 13, caractérisé en ce qu'il comporte des modules dits "communicateurs" (COM) et des modules dits "satellites" (SAT), chaque satellite étant associé à un communicateur par un deuxième numéro d'ordre; et en ce que, dans ledit procédé:

on séquence les émissions des satellites associés à un communicateur donné au moyen de délais, appelés "secondaires", de message signifiant et de candidat d'ordre supérieur;

on séquence les émissions des communicateurs (COM) au moyen de délais appelés primaires, de message signifiant et de candidat d'ordre supérieur, le délai de candidat d'ordre inférieur étant communiqué aux satellites et communicateurs, les délais primaires étant de durée plus longue que celle des délais secondaires.

15. Réseau selon la revendication 14, caractérisé en ce que dans ledit procédé:

on définit un premier délai intermédiaire de durée comprise entre celle des délais primaires en sorte qu'on permet aux satellites candidats émetteurs associés au communicateur (COM) autorisé à émettre, d'émettre un message de candidature d'ordre supérieur (SXM);

on définit un deuxième délai intermédiaire de durée comprise entre celle du délai primaire de candidat d'ordre supérieur et celle du délai de fin de cycle, en sorte qu'on permet aux satellites (SAT) candidats émetteurs associés à un communicateur (COM) d'ordre supérieur à celui autorisé à émettre, d'émettre un message de candidature d'ordre supérieur (SXM).

16. Réseau selon la revendication 15, caractérisé en ce que, dans ledit procédé, on définit un délai dit par commodité "de contrôle" de durée comprise entre celle du deuxième délai intermédiaire et celle du délai de fin de cycle et on laisse émettre les satellites (SATn,m) n'ayant été destinataires d'aucun message en provenance de leur communicateur associé (COMm) depuis un temps prédéterminé.

17. Réseau selon l'une quelconque des revendications 12 à 16, caractérisé en ce que, dans ledit procédé, on laisse émettre les modules dans une plage de durée déterminée en additionnant à celle du délai concerné précédant le message, une valeur aléatoire (ALEA) comprise entre des limites prédéterminées.

18. Réseau selon la revendication 17, caractérisé en ce qu'on définit un délai secondaire dit, par commodité, "de double numérotation" d'une durée comprise entre celle du délai d'accusé de réception et celle du délai secondaire de message signifiant et au cas où, par erreur, plusieurs satellites (SAT) associés à un même communicateur (COM) portent le même numéro, un premier d'entre eux émet après un délai de message signifiant, tandis que le ou les autres émettent après ledit délai secondaire de double numérotation; et en ce qu'on définit um délai primaire dit, par commodité, "de double numérotation" de durée comprise entre celle du délai secondaire de candidat d'ordre supérieur et celle du délai primaire de message signifiant et, au cas où, par erreur, plusieurs communicateurs (COM) portent le même numéro d'ordre, un premier de ceux-ci émet après un délai primaire de message signifiant, tandis que le ou les autres émettent après ledit délai primaire de double numérotation.

19. Réseau selon l'une quelconque des revendications 12 à 18, caractérisé en ce que, dans ledit procédé, lesdits délais sont constitués par la juxtaposition d'un nombre prédéterminé de délais de durées élémentaires.

20. Réseau selon l'une quelconque des revendications 12 à 19, caractérisé en ce que les messages sont, au moins en partie, composés d'impulsions dites actives (SA) modulant une onde porteuse à fréquence unique ($F_o$) pour tous les modules formant ainsi des signaux dits actifs, et en ce que, dans ledit procédé:

on élimine les signaux ($P_t$) de durée inférieure à une durée prédéterminée (T) survenant pendant chaque intervalle de temps ($t_2$) entre signaux actifs (SA);

on choisit une durée (t) de signal actif (SA) sensiblement supérieure à celle de ladite durée prédéterminée (T);

on code les états logiques par variation de l'intervalle de temps ($t_2$) entre signaux actifs (SA).

21. Réseau selon la revendication 20, caractérisé en ce que, pour déterminer le temps écoulé entre signaux actifs (SA) consécutifs, il est mesuré le temps écoulé entre les fronts arrière de signaux démodulés (MRE).

22. Réseau selon l'une quelconque des revendications 12 à 21, caractérisé en ce que lesdits modules adressables (M$_o$—M$_5$, M$_n$) comportant chacun un modulateur (MDUL), les messages sont, au moins en partie, composés d'impulsions dites actives (SA) modulant une onde porteuse à fréquence unique (F$_o$) pour tous les modules formant ainsi des signaux dits actifs, et en ce que l'impédance mesurée depuis la ligne (L) de l'interface (IACL) modulateur (MDUL)-ligne (L) est résistive à la fréquence (F$_o$) de l'onde porteuse et qu'elle est faible pendant l'émission de signaux actifs (SA) et élevée en dehors de l'émission.

23. Module pour réseau selon l'une quelconque des revendications 12 à 22, caractérisé en ce qu'il comporte un organe de codage-décodage ligne (CODL) comportant des moyens pour assurer le décodage de données (DCOD), le calcul du temps (CALT), le codage des données (CODD) et la mesure des intervalles de temps de silence entre messages (CSIL).

24. Module pour réseau selon l'une quelconque des revendications 12 à 21, dans lequel les messages sont, au moins en partie, composés d'impulsions dites "actives" modulant une onde porteuse formant ainsi des signaux actifs, caractérisé en ce qu'il comporte des moyens (DT) pour éliminer les signaux de durée inférieure à une durée prédéterminée (T) survenant pendant l'intervalle de temps (t$_2$) entre les signaux actifs (SA); des moyens générateurs de signal actif (SA) de durée sensiblement supérieure à celle de ladite durée prédéterminée (T); des moyens adaptés à coder des états logiques (CODD) par variation de l'intervalle de temps (t$_2$) entre signaux actifs (SA).

25. Module selon la revendication 24, caractérisé en ce qu'il comporte en outre des moyens (DCOD) adaptés à mesurer le temps écoulé entre les fronts dits "arrière" des signaux démodulés (MRE).

26. Module comportant un modulateur pour réseau, selon l'une quelconque des revendications 12 à 22, dans lequel les messages sont, au moins en partie, composés d'impulsions dites "actives" modulant une onde porteuse formant ainsi des signaux dits "actifs", caractérisé en ce que le modulateur (MDUL) est raccordé à un circuit de couplage ligne (COUPL) comportant un circuit résonnant série (L$_o$C$_o$) en série avec un circuit résonnant parallèle (L$_1$C$_1$) accordés à la fréquence (F$_o$) correspondant à la fréquence de l'onde porteuse dont l'impédance est faible dès lors qu'un signal actif (SA) est généré et élevée dans le cas contraire.

27. Application d'un réseau selon l'une quelconque des revendications 12 à 22, et des modules selon l'une quelconque des revendications 23 à 26, au domaine de la distribution domestique d'énergie électrique.

**Patentansprüche**

1. Verfahren zur Übertragung von numerischen Daten in einem Netz, das wenigstens zwei adressierbare Module (M$_0$—M$_5$, M$_n$) umfaßt, die durch wenigstens eine gemeinsame Übertragungsleitung (L) verbunden sind, bei dem die Zeit unterteilt wird, um Sendezeitabschnitte zu definieren, und bei dem jedes Modul (M$_1$-M$_5$) das Nichtvorhandensein eines Signals (MRE) auf der Leitung überprüft, bevor es sendet, und nur dann sendet, wenn kein Signal vorhanden ist, dadurch gekennzeichnet, daß man jedem Modul (COM) wenigstens eine Ordnungszahl zuweist und ihm wenigstens einen Zähler zuordnet, dessen Inhalt für die Ordnungszahl des Moduls repräsentativ ist, das zum Aussenden einer Nachricht autorisiert ist, die der Einfachheit halber als "bedeutungsvoll" bezeichnet wird, daß man wenigstens drei freibleibende Zeitintervalle oder Pausen zwischen den Nachrichten definiert, die in der nachfolgend genannten Reihenfolge zunehmende Längen besitzen und der Einfachheit halber als "Pause einer bedeutungsvollen Nachricht", "Pause einer Anwartschaft mit höherer Ordnungszahl" bzw. als "Pause einer Anwartschaft mit niedrigerer Ordnungszahl" bezeichnet werden, und weiterhin dadurch gekennzeichnet, daß man die erwähnten Pausen mit den zunehmenden Längen verwendet, um die eventuellen Sendevorgänge der Module in folgender Weise sequentiell zu ordnen:

Man läßt den zum Senden autorisierten "Sendeanwärter" am Ende einer der erwähnten "Pause einer bedeutungsvollen Nachricht" entsprechenden Pause nach dem letzten auf der Leitung auftretenden Signal senden,

man läßt die "Sendeanwärter", die eine Ordnungszahl besitzen, die größer ist als die des "Sendeanwärters", der gerade gesendet hat, eine "Anwartschafts-Nachricht" (SXM) am Ende einer Pause nach dem letzten auf der Leitung auftretenden Signal senden, die der erwähnten "Pause einer Anwartschaft mit höherer Ordnungszahl" entspricht,

man inkrementiert den Zähler eines jeden Moduls nach jeder "bedeutungsvollen Nachricht" und nach jeder "Anwartschafts-Nachricht", die nach einer "Pause einer Anwartschaft mit höherer Ordnungszahl" gesendet worden ist,

man läßt die "Sendeanwärter", die eine Ordungszahl besitzen, die kleiner ist als die Ordnungszahl des "Sendeanwärters", der gerade gesendet hat, eine "Anwartschafts-Nachricht" (SXM) nach einer "Pause einer Anwartschaft mit niedrigerer Ordnungszahl" nach dem letzten auf der Leitung auftretenden Signal senden, und

man setzt den Zähler eines jeden Moduls nach einer "Anwartschafts-Nachricht", die nach einer "pause einer Anwartschaft mit niedrigerer Ordnungszahl" ausgesendet worden ist, in der Weise auf den Anfangswert zurück, daß das in der Reihenfolge erste Modul autorisiert wird, eine "bedeutungsvolle Nachricht" auszusenden, wobei als "Sendeanwärter" die Module m bezeichnet werden, die eine "bedeutungsvolle Nachricht" zu übertragen haben, und unter "Anwartschafts-Nachricht" (SXM) eine Nachricht verstanden wird, die von einem "Sendeanwärter" gesendet wird, dessen Ordnungszahl nicht unmittelbar auf die Ordnungszahl des Moduls folgt, das gerade gesendet hat.

2. Verfahren nach Anspruch 1, dadurch gekennzeichnet, daß man eine vierte Pause definiert, deren Länge kleiner ist als die Länge der "pause einer bedeutungsvollen Nachricht", und die der Einfachheit halber als "Pause einer Empfangsbestätigung" bezeichnet wird, und daß man das Empfängermodul (COM) der letzten "bedeutungsvollen Nachricht" eine als "Empfangsbestätigung" (SOK, ROK) bezeichnete Nachricht am Ende einer Pause senden läßt, die der erwähnten "pause einer Empfangsbestätigung" entspricht.

3. Verfahren nach einem der Ansprüche 1 oder 2, dadurch gekennzeichnet, daß man in dem Netz als "Kommunikatoren" (COM) bezeichnete Module und als "Satelliten" (SAT) bezeichnete Module anordnet, wobei jeder "Satellit" vermittels einer zweiten Ordnungszahl einem "Kommunikator" zugeordnet ist,

daß man die Sendevorgänge der einem gegebenen "Kommunikator" zugeordneten "Satelliten" mit Hilfe von "sekundären Pausen einer bedeutungsvollen Nachricht" und "sekundären Pausen des Anwärters" mit höherer Ordnungszahl" sequentiell ordnet, und

daß man die Sendevorgänge der "Kommunikatoren" (COM) mit Hilfe von "primären Pausen einer bedeutungsvollen Nachricht" und "primären Pausen des Anwärters mit höherer Ordnungszahl" sequentiell ordnet, wobei die "Pause des Anwärters mit niedrigerer Ordnungszahl" den "Satelliten" und den "Kommunikatoren" übermittelt wird und die "primären" Pausen eine größere Länge besitzen als die "sekundären" Pausen.

4. Verfahren nach Anspruch 3, dadurch gekennzeichnet,

daß man eine erste Zwischenpause mit einer zu den Längen der "primären" Pausen gehörenden Länge so definiert, daß man den "Satelliten-Sendeanwärtern", die einem "Kommunikator" (COM) zugeordnet sind, der zum Senden autorisiert ist, erlaubt, eine "Nachricht einer Anwartschaft höherer Ordnungszahl" (SXM) zu senden, und

daß man eine zweite Zwischenpause mit einer Länge definiert, die zwischen der Länge der "primären Pause des Anwärters mit höherer Ordnungszahl" und der Länge der Zyklusende-Pause liegt, so daß man den "Satelliten-Sendeanwärtern" (SAT), die einem "Kommunikator" (COM) zugeordnet sind, der eine höhere Ordnungszahl besitzt als der "Kommunikator" der zum Senden autorisiert ist, erlaubt, eine "Nachricht einer Anwartschaft mit höherer Ordnungszahl" (SXM) auszusenden.

5. Verfahren nach Anspruch 4, dadurch gekennzeichnet, daß man eine Pause definiert, die der Einfachheit halber als "Steuerpause" bezeichnet wird und eine Länge besitzt, die zwischen der Länge der zweiten Zwischenpause und der Länge der Zyklusende-Pause liegt, und daß man die "Satelliten" (SATn,m), die keine Empfänger irgendeiner von ihrem zugehörigen " Kommunikator" (COMm) kommenden Nachricht waren, nach einer vorbestimmten Zeit senden läßt.

6. Verfahren nach einem der Ansprüche 1 bis 5, dadurch gekennzeichnet, daß man die Module dadurch in einem Bereich vorgegebener Länge senden läßt, daß man zur Länge der betreffenden, der Nachricht vorausgehenden Pause einen Zufallswert (ALEA) addiert, der zwischen vorbestimmten Grenzen liegt.

7. Verfahren nach Anspruch 6, dadurch gekennzeichnet, daß man eine sekundäre Pause definiert, die der Einfachheit halber als "Pause einer Doppelnumerierung" bezeichnet wird und eine Länge besitzt, die zwischen der Länge der "Pause einer Empfangsbesätigung" und der Länge einer "sekundären Pause einer bedeutungsvollen Nachricht" liegt, und daß in dem Fall, daß aufgrund eines Fehlers mehrere "Satelliten" (SAT), die demselben "Kommunikator" (COM) zugeordnet sind, dieselbe Zahl tragen, ein erster dieser Satelliten" nach einer "Pause einer bedeutungsvollen Nachricht" sendet, während der oder die anderen nach der erwähnten "sekundären Pause einer Doppelnumerierung" senden, und daß man eine primäre Pause definiert, die der Einfachheit halber als "Pause einer Doppelnumerierung" bezeichnet wird und eine Länge besitzt, die zwischen der Länge der "sekundären Pause des Anwärters mit höherer Ordnungszahl" und der Länge der "primären Pause einer bedeutungsvollen Nachricht" liegt, und daß in dem Fall, daß aufgrund eines Fehlers mehrere "Kommunikatoren" dieselbe Ordnungszahl tragen, ein erster dieser "Kommunikatoren" nach einer "primären Pause einer bedeutungsvollen Nachricht" sendet, während der oder die anderen nach der erwähnten "primären Pause einer Doppelnumerierung" senden.

8. Verfahren nach einem der Ansprüche 1 bis 7, dadurch gekennzeichnet, daß die genannten Pausen durch das Aneinanderfügen einer vorbestimmten Anzahl von Pausen gebildet werden, die eine Elementarlänge besitzen.

9. Verfahren nach einem der Ansprüche 1 bis 8, dadurch gekennzeichnet, daß die Nachrichten zumindest teilweise aus als "aktiv" bezeichneten Impulsen (SA) zusammengesetzt sind, die eine für alle Module eine einheitliche Frequenz (F_o) besitzende Trägerwelle modulieren und so als "aktiv" bezeichnete Signale bilden, und daß folgende Maßnahmen kombiniert werden:

es werden die Signale (P_t) eliminiert, die eine Länge aufweisen, die kleiner ist als eine vorgegebene Dauer (T), die während eines jeden Zeitintervalls (t2) zwischen aktiven Signalen (SA) auftritt,

es wird eine Länge (t) der aktiven Signale (SA) gewählt, die merklich größer ist, als die Länge der vorgegebenen Dauer (T),

es werden die Logikzustände durch Variation der Zeitintervalle (t2) zwischen aktiven Signalen (SA) kodiert.

10. Verfahren nach Anspruch 9, dadurch gekennzeichnet, daß man zur Bestimmung der zwischen aufeinanderfolgenden aktiven Signalen (SA) verstrichenen Zeit die Zeit mißt, die zwischen den hinteren Flanken der demodulierten Signale (MRE) verstreicht.

11. Verfahren nach einem der Ansprüche 1 bis 10, dadurch gekennzeichnet, daß jedes der adressierbaren Module ($M_0$—$M_5$, $M_n$) einen Modulator (MDUL) umfaßt, wobei die Nachrichten zumindest teilweise aus aktiven Impulsen (SA) zusammengesetzt sind, die eine Trägerwelle mit einer für alle Module einheitlichen Frequenz ($F_o$) modulieren und so aktive Signale bilden, und daß

man dafür sorgt, daß die von der Leitung (L) her gemessene Impedanz der Schnittstelle (IACL) des Modulators (MDUL) für die Leitung (L) bei der Frequenz ($F_o$) der Trägerwelle resistiv ist, damit sie während des Sendens von aktiven Signalen (SA) gering und außerhalb des Sendens erhöht ist.

12. Netz zur Übertragung von numerischen Daten, das wenigstens zwei adressierbare Module ($M_o$—$M_5$, $M_n$) umfaßt, die durch wenigstens eine gemeinsame Übertragungsleitung (L) verbunden sind, und bei dem ein Verfahren durchgeführt wird, bei welchem die Zeit unterteilt wird, um Sendezeitabschnitte zu definieren, und bei welchem jedes Modul ($M_1$—$M_5$) das Nichtvorhandensein eines Signals (MRE) auf der Leitung überprüft, bevor es sendet, und nur dann sendet, wenn kein Signal vorhanden ist, dadurch gekennzeichnet, daß in dem Netz jedem Modul (COM) wenigstens eine Ordnungszahl zugewiesen und wenigstens ein Zähler zugeordnet ist, dessen Inhalt für die Ordnungszahl des Moduls repräsentativ ist, das zum Aussenden einer Nachricht autorisiert ist, die der Einfachheit halber als "bedeutungsvoll" bezeichnet wird, und daß man bei dem Verfahren wenigstens drei freibleibende Zeitintervalle oder Pausen zwischen den Nachrichten definiert, die in der nachfolgend genannten Reihenfolge zunehmende Längen besitzen und der Einfachheit halber als "Pause einer bedeutungsvollen Nachricht", "Pause einer Anwartschaft mit höherer Ordnungszahl" bzw. als "Pause einer Anwartschaft mit niedrigerer Ordnungszahl" bezeichnet werden, und daß man die erwähnten Pausen mit den zunehmenden Längen verwendet, um die eventuellen Sendevorgänge der Module in folgender Weise sequentiell zu ordnen:

Man läßt den zum Senden autorisierten "Sendeanwärter" am Ende einer der erwähnten "Pause einer bedeutungsvollen Nachricht" entsprechenden Pause nach dem letzten auf der Leitung auftretenden Signal senden,

man läßt die "Sendeanwärter", die eine Ordnungszahl besitzen, die größer ist als die des "Sendeanwärters", der gerade gesendet hat, eine "Anwartschafts-Nachricht" (SXM) am Ende einer Pause nach dem letzten auf der Leitung auftretenden Signal senden, die der erwähnten "Pause einer Anwartschaft mit höherer Ordnungszahl" entspricht,

man inkrementiert den Zähler eines jeden Moduls nach jeder "bedeutungsvollen Nachricht" und nach jeder "Anwartschafts-Nachricht", die nach einer "Pause einer Anwartschaft mit höherer Ordnungszahl" gesendet worden ist,

man läßt die "Sendeanwärter", die eine Ordnungszahl besitzen, die kleiner ist als die Ordnungszahl des "Sendeanwärters", der gerade gesendet hat, eine "Anwartschafts-Nachricht" (SXM) nach einer "Pause einer Anwartschaft mit niedrigerer Ordnungszahl" nach dem letzten auf der Leitung auftretenden Signal senden, und

man setzt die Zähler eines jeden Moduls nach einer "Anwartschafts-Nachricht", die nach einer "Pause einer Anwartschaft mit niedrigerer Ordnungszahl" ausgesendet worden ist, in der Weise zurück, daß das in der Reihenfolge erste Modul autorisiert wird, eine "bedeutungsvolle Nachricht" auszusenden, wobei als "Sendeanwärter" die Module m bezeichnet werden, die eine "bedeutungsvolle Nachricht" zu übertragen haben, und unter" Anwartschafts-Nachricht" (SXM) eine Nachricht verstanden wird, die von einem "Sendeanwärter" gesendet wird, dessen Ordnungszahl nicht unmittelbar auf die Ordnungszahl des Moduls folgt, das gerade gesendet hat.

13. Netz nach Anspruch 12, dadurch gekennzeichnet, daß man bei dem Verfahren eine vierte Pause definiert, deren Länge kleiner ist als die Länge der "Pause einer bedeutungsvollen Nachricht", und die der Einfachheit halber als "Pause einer Empfangsbestätigung" bezeichnet wird, und daß man das Empfängermodul (COM) der letzten "bedeutungsvollen Nachricht" eine als "Empfangsbestätigung" (SOK, ROK) bezeichnete Nachricht am Ende einer Pause senden läßt, die der erwähnten "Pause einer Empfangsbestätigung" entspricht.

14. Netz nach einem der Ansprüche 12, 13, dadurch gekennzeichnet, daß es als "Kommunikatoren" (COM) bezeichnete Module und als "Satelliten" (SAT) bezeichnete Module umfaßt, wobei jeder "Satellit" vermittels einer zweiten Ordnungszahl einem "Kommunikator" zugeordnet ist, und daß man bei dem Verfahren

die Sendevorgänge der einem gegebenen "Kommunikator" zugeordneten "Satelliten" mit Hilfe von "sekundären Pausen einer bedeutungsvollen Nachricht" und "sekundären Pausen des Anwärters mit höherer Ordnungszahl" sequentiell ordnet, und

die Sendevorgänge der "Kommunikatoren" (COM) mit Hilfe von "primären Pausen einer bedeutungsvollen Nachricht" und "primären Pausen des Anwärters mit höherer Ordnungszahl" sequentiell ordnet, wobei die "Pause des Anwärters mit niedrigerer Ordnungszahl" den "Satelliten" und den "Kommunikatoren" übermittelt wird und die "primären" Pausen eine größere Länge besitzen als die "sekundären" Pausen.

15. Netz nach Anspruch 14, dadurch gekennzeichnet, daß bei dem genannten Verfahren

eine erste Zwischenpause mit einer zu den Längen der "primären" Pausen gehörenden Länge so definiert wird, daß man den "Satelliten-Sendeanwärtern", die einem "Kommunikator" (COM) zugeordnet sind, der zum Senden autorisiert ist, erlaubt, eine "Nachricht einer Anwartschaft höherer Ordnungszahl" (SXM) zu senden, und

eine zweite Zwischenpause mit einer Länge definiert wird, die zwischen der Länge der "primären Pause des Anwärters mit höherer Ordnungszahl" und der Länge der Zyklusende-Pause liegt, so daß man den "Satelliten-Sendeanwärtern" (SAT), die einem "Kommunikator" (COM) zugeordnet sind, der eine höhere Ordnungszahl besitzt, als der "Kommunikator", der zum Senden autorisiert ist, erlaubt, eine "Nachricht einer Anwartschaft mit höherer Ordnungszahl" (SXM) auszusenden.

16. Netz nach Anspruch 15, dadurch gekennzeichnet, daß man bei dem Verfahren eine Pause definiert, die der Einfachheit halber als "Steuerpause" bezeichnet wird und eine Länge besitzt, die zwischen der Länge der zweiten Zwischenpause und der Länge der Zyklusende-Pause liegt, und die "Satelliten" (SATn,m), die keine Empfänger irgendeiner von ihrem zugehörigen "Kommunikator" (COMm) kommenden Nachricht waren, nach einer vorbestimmten Zeit senden läßt.

17. Netz nach einem der Ansprüche 12 bis 16, dadurch gekennzeichnet, daß man bei dem Verfahren die Module dadurch in einem Bereich vorgegebener Länge senden läßt, daß man zur Länge der betreffenden, der Nachricht vorausgehenden Pause einen Zufallswert (ALEA) addiert, der zwischen vorbestimmten Grenzen liegt.

18. Netz nach Anspruch 17, dadurch gekennzeichnet, daß man eine sekundäre Pause definiert, die der Einfachheit halber als "Pause einer Doppelnumerierung" bezeichnet wird und eine Länge besitzt, die zwischen der Länge der "Pause einer Empfangsbestätigung" und der Länge der "sekundären Pause einer bedeutungsvollen Nachricht" liegt, und daß in dem Fall, daß aufgrund eines Fehlers mehrere "Satelliten" (SAT), die demselben "Kommunikator" (COM) zugeordnet sind, dieselbe Zahl tragen, ein erster dieser "Satelliten" nach einer "Pause einer bedeutungsvollen Nachricht" sendet, während der oder die anderen nach der erwähnten "sekundären Pause einer Doppelnumerierung" senden, und daß man eine primäre Pause definiert, die der Einfachheit halber als "Pause einer Doppelnumerierung" bezeichnet wird und eine Länge besitzt, die zwischen der Länge der "sekundären Pause des Anwärters mit höherer Ordnungszahl" und der Länge der "primären Pause einer bedeutungsvollen Nachricht" liegt, und daß in dem Fall, daß aufgrund eines Fehlers mehrere "Kommunikatoren" (COM) dieselbe Ordnungszahl tragen, ein erster dieser "Kommunikatoren" nach einer "primären Pause einer bedeutungsvollen Nachricht" sendet, während der oder die anderen nach der erwähnten "primären Pause einer Doppelnumerierung" senden.

19. Netz nach einem der Ansprüche 12 bis 18, dadurch gekennzeichnet, daß bei dem genannten Verfahren die genannten Pausen durch das Aneinanderfügen einer vorbestimmten Anzahl von Pausen gebildet werden, die jeweils eine Elementarlänge besitzen.

20. Netz nach einem der Ansprüche 12 bis 19 dadurch gekennzeichnet, daß die Nachrichten zumindest teilweise aus als "aktiv" bezeichneten Impulsen (SA) zusammengesetzt sind, die eine für alle Module eine einheitliche Frequenz ($F_o$) besitzende Trägerwelle modulieren und so als "aktiv" bezeichnete Signale bilden, und daß man bei dem genannten Verfahren

die Signale ($P_t$) eliminiert, die eine Länge aufweisen, die kleiner ist als eine vorgegebene Dauer (T), die während eines jeden Zeitintervalls ($t_2$) zwischen aktiven Signalen (SA) auftritt,

eine Länge (t) der aktiven Signale (SA) wählt, die merklich größer ist als die Länge der vorgegebenen Dauer (T),

die Logikzustände durch Variation der Zeitintervalle ($t_2$) zwischen aktiven Signalen (SA) kodiert.

21. Netz nach Anspruch 20, dadurch gekennzeichnet, daß man zur Bestimmung der zwischen aufeinanderfolgenden aktiven Signalen (SA) verstrichenen Zeit die Zeit mißt, die zwischen den hinteren Flanken der demodulierten Signale (MRE) verstreicht.

22. Netz nach einem der Ansprüche 12 bis 21, dadurch gekennzeichnet, daß jedes der adressierbaren Module ($M_0$—$M_5$, $M_n$) einen Modulator (MDUL) umfaßt, wobei die Nachrichten zumindest teilweise aus aktiven Impulsen (SA) zusammengesetzt sind, die eine Trägerwelle mit einer für alle Module einheitlichen Frequenz ($F_o$) modulieren und so aktive Signale bilden, und daß die von der Leitung (L) her gemessene Impedanz der Schnittstelle (IACL) des Modulators (MDUL) für die Leitung (L) bei der Frequenz ($F_o$) der Trägerwelle resistiv ist und daß sie während des Sendens der aktiven Signale (SA) gering und außerhalb des Sendens erhöht ist.

23. Modul für ein Netz nach einem der Ansprüche 12 bis 22, dadurch gekennzeichnet, daß es eine Leitungs-Kodier-Dekodier-Anordnung (CODL) umfaßt, die Einrichtungen zum Dekodieren der Daten (DCOD), zum Berechnen der Zeit (CALT), zum Kodieren der Daten (CODD) und zum Messen der Ruhezeitintervalle zwischen den Nachrichten (CSEL) umfaßt.

24. Modul für ein Netz nach einem der Ansprüche 12 bis 21, in dem die Nachrichten zumindest teilweise aus als "aktiv" bezeichneten Impulsen zusammengesetzt sind, die eine Trägerwelle modulieren und so aktive Signale bilden, dadurch gekennzeichnet, daß es folgende Bestandteile umfaßt: Einrichtungen (DT) zum Eliminieren von Signalen mit einer Länge, die kleiner ist als eine vorgegebene Länge (T) die während dem Zeitintervall ($t_2$) zwischen den aktiven Signalen (SA) auftritt, Einrichtungen zum Erzeugen des aktiven Signals (SA) mit einer Länge, die merklich größer ist als die Länge der vorbestimmten Zeitdauer (T), Einrichtungen (CODD) die dazu dienen, die Logikzustände durch Variation der Zeitintervalle ($t_2$) zwischen den aktiven Signalen (SA) zu kodieren.

25. Modul nach Anspruch 24, dadurch gekennzeichnet, daß es weiterhin Einrichtungen (DCOD) umfaßt, die dazu dienen, die Zeit zu messen, die zwischen den als "hintere" Flanken bezeichneten Flanken der demodulierten Signale (MRE) verstrichen ist.

26. Modul, das einen Netz-Modulator umfaßt, nach einem der Ansprüche 12 bis 22, bei dem die Nachrichten zumindest teilweise aus als "aktiv" bezeichneten Impulsen zusammengesetzt sind, die eine Trägerwelle modulieren und so als "aktiv" bezeichnete Signale bilden, dadurch gekennzeichnet, daß der Modulator (MDUL) mit einer Leitungs-Kopplungs-Schaltung (COUPL) verbunden ist, die einen Serien-Resonanzkreis ($L_o C_o$) in Reihe mit einem Parallelresonanzkreis ($L_1 C_1$) umfaßt, die auf die Frequenz ($F_o$) abgestimmt sind, die der Frequenz der Trägerwelle entspricht, und dessen Impedanz nieder ist, während ein aktives Signal (SA) erzeugt wird, und im entgegengesetzten Fall groß ist.

27. Verwendung eines Netzes nach einem der Ansprüche 12 bis 22, und von Modulen nach einem der Ansprüche 23 bis 26 im Bereich der häuslichen Versorgung mit elektrischer Energie.

## Claims

1. A method of digital data transmission in a network of the kind comprising at least two addressable modules ($M_0$—$M_5$, $M_n$) connected by at least one non-dedicated transmission line (L), which method is of the kind in which time is subdivided to define transmission time intervals and in which each module ($M_1$—$M_5$) checks for the absence of a signal (MRE) on the line before transmitting and transmits only when there is no signal on the line, characterized in that at least one order number is assigned to each module (COM); it has associated with it at least one counter the content of which is representative of the number of the module authorized to transmit a message, which for convenience is called "meaningful"; at least three time intervals of silence between messages, or time-delays, of increasing duration, are defined which for convenience are called "meaningful message time-delay", "higher order candidature time-delay" and "lower order candidature time-delay" respectively, and characterized in that, calling for convenience the modules m having a meaningful message to transmit, "transmitter candidate modules" and a message transmitted by a transmitter candidate module for which the order number does not immediately follow that of the module which has just transmitted a "candidature message" (SXM), the said time-delays of increasing duration are used to sequence transmissions from modules as follows:

the transmitter candidate authorized to transmit is allowed to transmit at the end of a time-delay corresponding to the said meaningful message time-delay after the last signal present on the line;

a candidature message (SXM) can be transmitted by the transmitter candidates for which the order number is higher than that of the module which has just transmitted at the end of a time-delay corresponding to the said higher order candidature time-delay after the last signal present on the line;

an increment is added to the counter of each module after each meaningful message and each candidature message transmitted after a higher order candidature time-delay;

a candidature message (SXM) can be transmitted by the transmitter candidates for which the order number is lower than that of the module which has just transmitted after a lower order candidature time-delay after the last signal present on the line; and

the counter of each module is reinitialized after a candidature message transmitted after a lower order candidature time-delay so that the module with the lowest order number is authorized to transmit a meaningful message.

2. A method according to Claim 1, characterized in that a fourth time-delay is defined which has a shorter duration than the meaningful message time-delay and which is called for convenience a "reception-acknowledgement time-delay" and in that a message called a "reception-acknowledgement message" (SOK, ROK) can be transmitted, at the end of a time-delay corresponding to the said reception-acknowledgement time-delay, by the module (COM) to which the last meaningful message was addressed.

3. A method according to any one of Claims 1 or 2, characterized in that modules termed "communicator modules" (COM) and "satellite modules" (SAT) are arranged in the network, each satellite module being associated with a communicator module by a second order number:

transmissions from satellite modules associated with a given communicator module are sequenced by means of time-delays called "secondary" meaningful message time-delays and "secondary" higher order candidature time-delays;

transmissions from communicator modules (COM) are sequenced by means of time-delays called "primary" meaningful message time-delays and "primary" higher order candidature time-delays, the lower order candidature time-delays being communicated to the satellite modules and the communicator modules, the primary time-delays being of longer duration than the secondary time-delays.

4. A method according to Claim 3, characterized in that

a first intermediate time-delay is defined having a duration between that of the primary time-delays so that the satellite transmitter candidates associated with a communicator module (COM) which is authorized to transmit are allowed to transmit a higher order candidature message (SXM);

a second intermediate time-delay is defined having a duration between that of the primary higher order candidature time-delay and that of the end of cycle time-delay so that satellite (SAT) transmitter candidates associated with a communicator module (COM) of higher order than that authorized to transmit are allowed to transmit a higher order candidature message (SXM).

5. A method according to Claim 4, characterized in that a time-delay is defined, which for convenience is called a "control" time-delay, having a duration between that of the second intermediate time-delay and that of the end of cycle time-delay, and in that the satellite modules (SATn, m) which have not had a message addressed to them from their associated communicator module (COMm) for a predetermined time are allowed to transmit.

6. A method according to any one of Claims 1 to 5, characterized in that the modules are allowed to transmit in a period of duration determined by adding to the respective time-delay preceding the message a random value (ALEA) which is between predetermined limits.

7. A method according to Claim 6, characterized in that a secondary time-delay is defined, which for convenience is called a "double-numbering" time-delay, having a duration between that of the reception acknowledgement time-delay and that of the meaningful message secondary time-delay, and in the case where, by mistake, several satellite modules (SAT) associated with the same communicator module (COM) have the same number, a first of them transmits after a meaningful message time-delay whilst the others or other transmit(s) after the said double-numbering secondary time-delay; and in that a primary time-delay is defined, which for convenience is called a "double-numbering" time-delay, having a duration between that of the higher order candidature secondary time-delay and that of the meaningful message primary time-delay and, in the case where, by mistake, several communicator modules (COM) have the same order number, a first of them transmits after a meaningful message primary time-delay whilst the others or other transmit(s) after the said double-numbering primary time-delay.

8. A method according to any one of Claims 1 to 7, characterized in that the said time-delays are formed by adding together a predetermined number of time-delays of elementary unit duration.

9. A method according to any one of Claims 1 to 8, characterized in that the messages are composed, at least in part, of pulses called "active" (SA) which modulate a single carrier wave frequency ($F_o$) for all the modules thus forming active signals, and in that in combination:

signals ($P_t$) of lesser duration than a predetermined duration (T) occurring during each time interval ($t_2$) between active signals (SA) are eliminated;

an active signal (SA) duration (t) is chosen which is substantially greater than that of the said predetermined duration (T);

logic states are encoded by varying the time interval ($t_2$) between active signals (SA).

10. A method according to Claim 9, characterized in that in order to determine the time elapsed between consecutive active signals (SA), the time elapsed between the trailing edges of demodulated signals (MRE) is measured.

11. A method according to any one of Claims 1 to 10, characterized in that the said addressable modules ($M_0$—$M_5$, $M_n$) each comprise a modulator (MDUL), the messages are, at least in part, composed of pulses called "active" (SA) which modulate a single carrier wave frequency ($F_o$) for all the modules thus forming active signals, and in that:

it is arranged that the impedance measured from the line (L) at the interface (IACL) modulator (MDUL)-line (L) is resistive at the carrier wave frequency ($F_o$), that it is low during transmission of active signals (SA), and that it is high when there is no transmission.

12. A network for transmitting digital data of the kind comprising at least two addressable modules ($M_0$—$M_5$, $M_n$) connected by at least one non-dedicated transmission line (L), which employs a method of the kind in which time is subdivided to define transmission time intervals and in which each module ($M_1$—$M_5$) checks for the absence of a signal (MRE) on the line before transmitting, and transmits only when there is no signal on the line, the network being characterized in that at least one order number is assigned to each module (COM); it has associated with it at least one counter the content of which is representative of the number of the module authorized to transmit a message, which for convenience is called "meaningful", and in that in the said method at least three time intervals of silence between messages, or time-delays, of increasing duration, are defined which, for convenience, are called "meaningful message time-delay", "higher order candidature time-delay" and "lower order candidature time-delay" respectively, and the modules m having a meaningful message to transmit being called for convenience "transmitter candidate modules" and a message transmitted by a candidate transmitter for which the order number does not immediately follow that of the module which has just transmitted being called a "candidature message" (SXM), the said time-delays of increasing duration being used to sequence transmissions from modules as follows:

the transmitter candidate authorized to transmit is allowed to transmit at the end of a time-delay corresponding to the said meaningful message time-delay after the last signal present on the line;

a candidature message (SXM) can be transmitted by the transmitter candidates for which the order number is higher than that of the module which has just transmitted at the end of a time-delay corresponding to the said higher order candidature time-delay after the last signal present on the line;

an increment is added to the counter of each module after each meaningful message and each candidature message transmitted after a higher order candidature time-delay;

a candidature message (SXM) can be transmitted by the transmitter candidates for which the order number is lower than that of the module which has just transmitted after a lower order candidature time-delay after the last signal present on the line; and

the counter of each module is reinitialized after a candidature message transmitted after a lower order candidature time-delay in such a way that the module with the lowest order number is authorized to transmit a meaningful message.

13. A network according to Claim 12, characterized in that, in the method, a fourth time-delay is defined which has a shorter duration than the meaningful message time-delay and which is called for convenience "reception-acknowledgement time-delay" and in that a message called a "reception-acknowledgement message" (SOK, ROK) can be transmitted, at the end of a time-delay corresponding to the said reception-acknowledgement time-delay, by the module (COM) to which the last meaningful message was addressed.

14. A network according to any one of Claims 12 or 13, characterized in that it comprises modules called "communicator modules" (COM) and "satellite modules" (SAT), each satellite module being associated with a, communicator module by a second order number, and in that in the said method:

transmissions from satellite modules associated with a given communicator module are sequenced by means of time-delays called "secondary" meaningful message time-delays and "secondary" higher order candidature time-delays;

transmissions from communicator modules (COM) are sequenced by means of time-delays called "primary" meaningful message time-delays and "primary" higher order candidature time-delays, the lower order candidature time-delay being communicated to the satellite modules and the communicator modules, the primary time-delays being of longer duration than the secondary time-delays.

15. A network according to Claim 14, characterized in that in the said method:

a first intermediate time-delay is defined having a duration between that of the primary time-delays so that the satellite transmitter candidates associated with a communicator modules (COM) which is authorized to transmit are allowed to transmit a higher order candidature message (SXM);

a second intermediate time-delay is defined having a duration between that of the primary higher order candidature time-delay and that of the end of cycle time-delay so that satellite (SAT) transmitter candidates associated with a communicator module (COM) of higher order than that authorized to transmit are allowed to transmit a higher order candidature message (SXM).

16. A network according to Claim 15, characterized in that in the said method a time-delay is defined, which for convenience is called a "control" time-delay, having a duration between that of the second intermediate time-delay and that of the end of cycle time-delay, and in that the satellite modules (SATn, m) which have not had a message addressed to them from their associated communicator module (COMm) for a predetermined time are allowed to transmit.

17. A network according to any one of Claims 12 to 16, characterized in that in the said method the modules are allowed to transmit in a period of duration determined by adding to the respective time-delay preceding the message a random value (ALEA) which is between predetermined limits.

18. A network according to Claim 17, characterized in that a secondary time-delay is defined, which for convenience is called a "double-numbering" time-delay, having a duration between that of the reception acknowledgement time-delay and that of the meaningful message secondary time-delay, and in the case where, by mistake, several satellite modules (SAT) associated with the same communicator module (COM) have the same number, a first of them transmits after a meaningful message time-delay whilst the others or other transmit(s) after the said double-numbering secondary time-delay; and in that a primary time-delay is defined, which for convenience is called a "double-numbering" time-delay, having a duration between that of the higher order candidature secondary time-delay and that of the meaningful message primary time-delay and, in the case where, by mistake, several communicator modules (COM) have the same order number, a first of them transmits after a meaningful message primary time-delay whilst the others or other transmit(s) after the said double-numbering primary time-delay.

19. A network according to any one of Claims 12 to 18, characterized in that in the said method the said time-delays are formed by adding together a predetermined number of time-delays of elementary unit duration.

20. A network according to any one of Claims 12 to 19 characterized in that the messages are composed, at least in part, of pulses called "active" (SA) which modulate a single carrier wave frequency $(F_o)$ for all the modules thus forming active signals, and in that in the said method:

signals $(P_t)$ of lesser duration than a predetermined duration (T) occurring during each time interval $(t_2)$ between active signals (SA) are eliminated;

an active signal (SA) duration (t) is chosen which is substantially greater than that of the said predetermined duration (T);

logic states are encoded by varying the time interval $(t_2)$ between active signals (SA).

21. A network according to Claim 20, characterized in that in order to determine the time elapsed between consecutive active signals (SA), the time elapsed between the trailing edges of demodulated signals (MRE) is measured.

22. A network according to any one of Claims 12 to 21, characterized in that the said addressable modules $(M_0—M_5, M_n)$ each comprise a modu-

lator (MDUL), the messages are, at least in part, composed of pulses called "active" (SA) which modulate a single carrier wave frequency ($F_o$) for all the modules thus forming active signals, and in that the impedance measured from the line (L) at the interface (IACL) modulator (MDUL)-line (L) is resistive at the carrier wave frequency ($F_o$), that it is low during transmission of active signals (SA), and that it is high when there is no transmission.

23. A module for a network in accordance with any one of Claims 12 to 22, characterized in that it comprises a line coding-decoding unit (CODL) comprising means for decoding data (DCOD), for calculating times (CALT), for encoding data (CODD), and for measuring time intervals of silence between messages (CSIL).

24. A module for a network in accordance with any one of Claims 12 to 21, in which the messages are composed, at least in part, of pulses called "active" which modulate a carrier wave frequency thus forming active signals, characterized in that it comprises means (DT) for eliminating signals of lesser duration than a predetermined duration (T) occurring during the time interval ($t_2$) between active signals (SA), means for generating active signals for a duration which is substantially greater than that of the said predetermined duration (T), and means adapted to encode logic states (CODD) by varying the time interval ($t_2$) between active signals (SA).

25. A module according to Claim 24, characterized in that it also comprises means (DCOD) adapted to measure the time elapsed between the edges referred to as "trailing" of the demodulated signals (MRE).

26. A module comprising a modulator for a network according to any one, of Claims 12 to 22, in which the messages are composed, at least in part, of pulses called "active" which modulate a carrier wave frequency thus forming active signals, characterized in that the modulator (MDUL) is connected to a line interface circuit (COUPL) comprising a series resonant circuit ($L_oC_o$) in series with a parallel resonant circuit ($L_1C_1$) both tuned to the frequency ($F_o$) corresponding to the carrier wave frequency, the impedance of which is low when an active signal (SA) is generated and high otherwise.

27. Use of a network according to any one of Claims 12 to 22 and of modules according to any one of Claims 23 to 26 in the field of domestic electrical power distribution.

FIG.1

FIG.2

FIG.3

FIG.4

FIG.5

FIG.6

FIG.7

FIG.8

FIG.9

FIG.10

FIG.11

FIG.12

7

13_a    Indicateur de présence ITP

13_b    Bit "zéro"B0

13_c    Bit "un" B1

# FIG.13

14_a    Start   ST    B0 B0

14_b    Zéro    C0    B0 B1

14_c    Un      C1    B1 B0

14_d    Stop    SP    B1 B1

# FIG.14

15_a    Synchronisation   SYN

| ITP | C1 | C1 | C1 | ST | Suite du message |

15_b    Octet de données  OCT

| message en cours | ST | $\overset{0}{C_0/_1}$ | $\overset{1}{C_0/_1}$ | $\overset{2}{C_0/_1}$ | | $\overset{m<8}{C_0/_1}$ | SP | Suite du message |

15_c    Fin de message    FNM

| message en cours | SP | SP | SIL |

# FIG.15

16_a  Message de données MOC

| SIL | SYN | OCT$_0$ | | OCT$_n$ | FNM | SIL |

16_b  Message reçu SOK

| SIL | SYN | CO | FNM | SIL |

16_c  Message reçu a répéter ROK

| SIL | SYN | C1 | FNM | SIL |

16_d  Signal d'existence SXM

| SIL | ITP | SIL |

# FIG.16

| SIL | SYN | IN | EM | DN | OCT$_0$ | OCT$_1$ | | OCT$_n$ | FNM | SIL |

IN indicateur de type de message
EM numéro d'émetteur
DN numéro de destinataire

# FIG.17

FIG.18

EP 0 201 498 B1

FIG.19

11

FIG.20

FIG.21

FIG.22

FIG.23

FIG.24

FIG. 25

FIG.26